(19) Europäisches Patentamt
European Patent Office
Office européen des brevets

(11) **EP 3 875 792 B1**

(12) **EUROPÄISCHE PATENTSCHRIFT**

(45) Veröffentlichungstag und Bekanntmachung des Hinweises auf die Patenterteilung:
**16.03.2022   Patentblatt 2022/11**

(21) Anmeldenummer: **21156039.6**

(22) Anmeldetag: **09.02.2021**

(51) Internationale Patentklassifikation (IPC):
**F16B 37/12** *(2006.01)*       **F16B 39/10** *(2006.01)*

(52) Gemeinsame Patentklassifikation (CPC):
**F16B 37/12; F16B 39/10**

(54) **MONTIERSICHERUNG, GEWINDEBOLZEN MIT MONTIERSICHERUNG, EIN BAUTEIL MIT INSTALLIERTEM GEWINDEBOLZEN SOWIE EIN HERSTELLUNGSVERFAHREN FÜR DIE MONTIERSICHERUNG UND EIN MONTAGEVERFAHREN DES GEWINDEBOLZENS MIT MONTIERSICHERUNG**

MOUNTING DEVICE, THREADED BOLT WITH MOUNTING PROTECTION, A COMPONENT WITH AN INSTALLED THREADED BOLT AND A METHOD FOR MANUFACTURING THE MOUNTING PROTECTION AND A METHOD FOR ASSEMBLING THE THREADED BOLT WITH A MOUNTING PROTECTION

FIXATION DE MONTAGE, BOULON FILETÉ POURVU DE FIXATION DE MONTAGE, COMPOSANT POURVU DE BOULON FILETÉ INSTALLÉ, AINSI QUE PROCÉDÉ DE FABRICATION POUR LA FIXATION DE MONTAGE ET PROCÉDÉ DE MONTAGE DU BOULON FILETÉ POURVU DE FIXATION DE MONTAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.03.2020   DE 102020105838**

(43) Veröffentlichungstag der Anmeldung:
**08.09.2021   Patentblatt 2021/36**

(73) Patentinhaber: **Böllhoff Verbindungstechnik GmbH**
**33649 Bielefeld (DE)**

(72) Erfinder:
• **RÖHR, André**
**32052 Herford-Elverdissen (DE)**
• **GRUBERT, Klaus-Friedrich**
**31675 Bückeburg (DE)**
• **SCHÄFER, Helmut**
**71394 Kernen (DE)**
• **GUTSCHE, Rayk**
**70327 Stuttgart (DE)**

(74) Vertreter: **HWP Intellectual Property**
**Ridlerstraße 35**
**80339 München (DE)**

(56) Entgegenhaltungen:
CN-A- 1 162 073        DE-A1-102016 124 716
JP-A- 2002 333 005     US-A1- 2002 048 499
US-B2- 9 464 659

EP 3 875 792 B1

**Beschreibung**

1. Gebiet der Erfindung

Die vorliegende Erfindung betrifft eine Montiersicherung angepasst an ein normiertes Regelgewinde oder ein normiertes Feingewinde eines Gewindeschafts eines Gewindebolzens mit einem Bolzenkopf, so dass die Montiersicherung verliersicher auf dem Regelgewinde RG oder dem Feingewinde FG des Gewindeschafts positionierbar und der Gewindebolzen mit Montiersicherung auszugssicher eingesteckt in eine Bauteilöffnung anordenbar ist. Zudem betrifft vorliegende Erfindung einen Gewindebolzen mit einem Gewindeschaft und einem Bolzenkopf, der ein normiertes Regelgewinde RG oder ein normiertes Feingewinde FG aufweist, sowie eine Montiersicherung, die verliersicher auf dem Gewindeschaft angeordnet ist. Zudem betrifft vorliegende Erfindung ein Bauteil mit einem im Querschnitt runden Durchgangsloch, in dem der Gewindebolzen mit Montiersicherung angeordnet ist. Abschließend betrifft vorliegende Erfindung ein Herstellungsverfahren der genannten Montiersicherung sowie ein Montageverfahren des Gewindebolzens mit Montiersicherung in dem Durchgangsloch des Bauteils.

2. Hintergrund der Erfindung

EP 2 119 921 A 1 beschreibt eine Verbindungssicherung für eine Mutter einer Gewindeverbindung oder für ein Bauteil befestigt durch einen Gewindebolzen und eine Mutter. Es wird daher zunächst die Mutter auf dem Gewindebolzen fixiert und die Verbindung hergestellt. Diese Verbindung darf sich nicht durch Schwingungen oder dergleichen lösen. Die Verbindungssicherung besteht aus einer spiralfederähnlichen Wendel mit zwei Endabschnitten, die sich radial über die Wendel hinaus erstrecken. Diese Verbindungssicherung wird nach dem Aufschrauben der Mutter auf den Gewindebolzen auf den überstehenden Gewindeschaft der Mutter hinterher auf den Gewindebolzen aufgeschraubt. Ein Endabschnitt der Verbindungssicherung ist als Haken ausgebildet, der in Richtung des anderen Endes der spiralfederähnlichen Wendel gebogen ist. Das andere Ende erstreckt sich in einem bestimmten Winkel schräg radial auswärts in Bezug auf die Wendel und über die Außenseite der Wendel hinaus. Die Windungen der Wendel besetzen die Gewindegänge, die von einer sich lösenden Mutter durchlaufen werden müssten. Eine auf die Wendel auflaufende Mutter drückt die einzelnen Windungen der Wendel gegeneinander, wodurch sie sich gegenseitig blockieren. Auf diese Weise wird die Verbindung gesichert.

Eine ähnliche Verbindungssicherung beschreibt WO 2018/155466. Die beiden Enden einer federartigen Spiralwendel sind ebenfalls aufeinanderzu gebogen und überlagern zum Teil eine Nachbarwindung. Somit dient die der Mutter zugewandte Windung als Auflaufwindung, die sich blockierend auf die Nachbarwindungen schiebt. Die der Mutter abgewandte Windung dient als Auffangwindung, in der sich aufschiebende Nachbarwindungen gegenseitig blockieren. Somit dient auch diese Konstruktion einer Verbindungssicherung .

Es ist häufig der Fall, dass jedoch zwei Bauteile an einer schwer zugänglichen Position miteinander mittels Gewindebolzen verbunden werden sollen. Zu diesem Zweck weisen die beiden miteinander zu verbindenden Bauteile jeweils ein Durchgangsloch auf, durch welche ein Gewindebolzen mit Gewindeschaft und Bolzenkopf zunächst hindurchgesteckt werden muss, um nachfolgend über eine Gewindeverbindung die beiden Bauteile über den Gewindebolzen miteinander zu verbinden. Die schwere Zugänglichkeit der Verbindungsstelle bringt mit sich, dass zunächst zwei Durchgangslöcher aufeinander ausgerichtet werden müssen. Erst danach ist es möglich, einen Gewindebolzen mit einem Gewindeschaft voraus durch diese Löcher zu stecken, um nachfolgend über eine Gewindeverbindung beide Bauteile aneinander befestigen zu können. Sowohl das Ausrichten der Durchgangslöcher wie auch das Einstecken des Gewindebolzens ist häufig mit hohem Zeitaufwand und Fehlern beim Zusammenbau verbunden.

Es ist daher die Aufgabe der vorliegenden Erfindung, derartige Verbindungssituationen zu vereinfachen, sodass mit einem geringeren Zeitaufwand eine Verbindung zwischen zwei Bauteilen über einen Gewindebolzen innerhalb von Durchgangslöchern hergestellt werden kann.

3. Zusammenfassung der Erfindung

Die obige Aufgabe wird durch eine Montiersicherung gemäß dem unabhängigen Patentanspruch 1, durch einen Gewindebolzen mit einem Gewindeschaft und einem Bolzenkopf sowie einer auf dem Gewindeschaft angeordneten Montiersicherung gemäß dem unabhängigen Patentanspruch 8, durch ein Bauteil mit einem im Querschnitt runden Durchgangsloch, in dem der Gewindebolzen mit Montiersicherung angeordnet ist, gemäß dem unabhängigen Patentanspruch 11 sowie durch ein Herstellungsverfahren der oben genannten

Montiersicherung gemäß dem unabhängigen Patentanspruch 13 und ein Montageverfahren des oben genannten Gewindebolzens mit Montiersicherung gemäß dem unabhängigen Patentanspruch 14 gelöst. Vorteilhafte Ausgestaltungen und Weiterentwicklungen vorliegender Erfindung gehen aus der folgenden Beschreibung, den begleitenden Zeichnungen sowie den anhängenden Patentansprüchen hervor.

Die erfindungsgemäße Montiersicherung ist an ein Gewinde eines Gewindeschafts eines Gewindebolzens mit einem Bolzenkopf angepasst. Entsprechend ist die Montiersicherung verliersicher auf dem Gewinde RG; FG des Gewindeschafts positionierbar und der Gewindebolzen mit Montiersicherung auszugssicher eingesteckt in eine Bauteilöffnung anordenbar. Dazu weist die Montiersicherung die folgenden Merkmale auf: eine zylinderförmige Wendel bestehend aus einer Mehrzahl schraubenförmig gewickelter Windungen eines Drahts, die in Steigungsrichtung der Wendel ein erstes Ende und ein zweites Ende aufweist, beginnend am ersten Ende der Wendel ist mindestens eine Haltewindung vorgesehen, die sich über einen Winkelbereich von größer 360° um eine Mittellängsachse der Wendel erstreckt und eine positive Steigung $P_H$ sowie einen inneren Durchmesser $D_H$ aufweist, anschließend an die Haltewindung ist eine Übergangswindung vorgesehen, die sich über einen Winkelbereich von mindestens 65° um die Mittellängsachse der Wendel erstreckt und im Vergleich zur Haltewindung eine kleinere Steigung $P_U$ sowie einen zunehmenden inneren Durchmesser $D_U$ aufweist, und angrenzend an das zweite Ende der Wendel ist eine Blockierwindung vorgesehen, die sich über einen Winkelbereich von mindestens 65° um die Mittellängsachse der Wendel erstreckt und eine im Vergleich zur Haltewindungen negative Steigung $P_B$ aufweist, so dass zumindest ein Endbereich der Blockierwindung in axialer Richtung der Mittellängsachse zwischen einer Einsteckposition und einer Blockierposition elastisch versetzbar ist, wobei der Endbereich der Blockierwindung in der Einsteckposition das zweite Ende der Wendel bildet und in der Blockierposition radial auswärts von der Übergangswindung und/oder der Haltewindung angeordnet ist.

Die erfindungsgemäße Montiersicherung ist eine Kombination aus funktional unterschiedlichen Windungen in einer gemeinsamen zylinderförmigen Wendel. Diese funktionellen Windungen sind mindestens eine Haltewindung, eine Übergangswindung und eine Blockierwindung. Dabei legt die Bezeichnung "Windung" nicht den Winkelbereich fest, über den sich die jeweilige funktionale Windung um die Mittellängsachse der Wendel erstreckt.

Die Montiersicherung mit ihren verschiedenen funktionalen Windungen garantiert, dass ein Gewindebolzen mit Bolzenkopf in einem Durchgangsloch eines Bauteils auszugssicher gehalten wird. Dies dient der Vorbereitung einer später mit dem Gewindebolzen herzustellenden Verbindung zur Befestigung des Bauteils mit Durchgangsloch. Dazu realisiert die Haltewindung zunächst eine verlässliche Verbindung zwischen dem Gewindebolzen und der Montiersicherung. Denn die Haltewindung sorgt dafür, dass die Montiersicherung verlässlich reibschlüssig in dem Gewinde bzw. den Gewindegängen des Gewindeschafts des Gewindebolzens gehalten wird. Die Blockierwindung wiederum sichert den Halt des Gewindebolzens im Durchgangsloch. Zu diesem Zweck wirkt die Blockierwindung ähnlich einem Widerhaken, da sie ein Einstecken des Gewindebolzens mit Montiersicherung entgegen der Steigungsrichtung des Bolzengewindes oder der Haltewindung der Montiersicherung in das Durchgangsloch erlaubt, während sie einem Auszug des Gewindebolzens aus dem Durchgangsloch in entgegengesetzter Richtung entgegenwirkt bzw. diesen Auszug blockiert. Denn wird ein Rand des Durchgangsloches in Steigungsrichtung der Haltewindung oder des Gewindes auf dem Gewindeschaft an der Blockierwindung vorbei bewegt, versetzt der Rand die Blockierwindung in den freien Gewindegang des Gewindeschafts. Entsprechend ist der Gewindebolzen mit Montiersicherung im Durchgangsloch des Bauteils aufnehmbar. Im Falle des Auszugs des Gewindebolzens aus dem Durchgangsloch versetzt der Rand des Durchgangsloches die Blockierwindung aber auf die im Gewindegang des Gewindeschafts angeordnete oder angeordneten benachbarten Windungen der Wendel. Aufgrund dieser Anordnung weist der Gewindebolzen mit Montiersicherung einen Schaftaußendurchmesser auf, der für ein Passieren des Durchgangsloches in Steigungsrichtung der Haltewindung oder des Gewindes auf dem Bolzenschaft zu groß ist und dadurch ein Passieren verhindert. Somit gewährleistet die Montiersicherung ein ungehindertes Anordnen und einen auszugssicheren Halt des Gewindebolzens mit Montiersicherung im Durchgangsloch des Bauteils.

Gemäß einer bevorzugten Ausgestaltung der Montiersicherung weist deren Draht einen Drahtdurchmesser $D_{Draht}$ aus dem Bereich

$$\sqrt{3} * \frac{7}{24} * P_{RG;FG} \leq D_{Draht} \leq \sqrt{3} \frac{7}{16} * P_{RG;FG}$$

auf, wobei $P_{RG;FG}$ eine Steigung eines Gewindes RG; FG bezeichnet, welches bevorzugt auf dem Gewindeschaft des Gewindebolzens vorgesehen ist.

Die erfindungsgemäße Montiersicherung ist darauf abgestimmt, dass sie auf einem Gewindeschaft des Gewindebolzens mit einem Gewinde RG; FG angeordnet wird. Vorzugsweise ist das Gewinde ein normiertes Regelgewinde RG oder ein normiertes Feingewinde FG, die in unterschiedlichen Teilen der DIN-Norm DIN 13 in öffentlich zugänglicher Weise definiert sind. Zur DIN-Norm DIN 13 gibt es analoge Gewindenormen in anderen Normsystemen, die in gleicher Weise die geometrischen Gewindedaten festlegen. Dazu zählt beispielsweise der US-amerikanische Standard UTS (Unified Thread Standard). UTS spezifiziert die Form, Größenabstufung, Toleranz usw. für US-amerikanische zöllige Gewinde. Dazu zählen u.a. das US amerikanische Einheits-Grobgewinde UNC (Unified Coarse Thread Series), welches in Zoll gemessen wird und einen Flankenwinkel von 60 ° aufweist. Das entsprechende Feingewinde bezeichnet man als UNF Gewinde (Unified National Fine Thread Series). Diese sind in ANSI/ASME B1.1 definiert.

Da die Montiersicherung bevorzugt an normierte Regelgewinde oder normierte Feingewinde angepasst ist, lässt sich der Drahtdurchmesser der Montiersicherung in Abhängigkeit von der jeweils für das normierte Regelgewinde oder das normierte Feingewinde definierten Steigung festlegen. Denn diese normierten Regelgewinde und die normierten Feingewinde legen in einem Außengewinde einen Winkel von 60° fest, in dem benachbarte Gewindeflanken zueinander angeordnet sind. Aus dieser Winkelfestlegung sowie weiterer Durchmesserdaten von Regelgewinde und Feingewinde lässt sich herleiten, welche Drahtdicke die Montiersicherung aufweisen muss, um verlässlich in dem Regelgewinde oder Feingewinde des Gewindeschafts des Gewindebolzens angeordnet zu sein. Denn der Durchmesser des Drahts der Montiersicherung legt fest, wie tief der Draht der Montiersicherung in dem jeweiligen Gewindegang des Gewindeschafts aufgenommen wird. Falls der Draht zu dick sein sollte, wird die Montiersicherung beim Einsetzen des Gewindebolzens in das Durchgangsloch auf dem Gewindeschaft verschoben. Entsprechend kann die Montiersicherung auch nicht ihre Haltefunktion erfüllen, da sie sich nicht gemeinsam mit dem Gewindeschaft durch das Durchgangsloch hindurchstecken lässt. Sollte der Drahtdurchmesser zu klein sein, also eine untere Grenze unterschreiten, dann sinkt der Draht der Haltewindung und der Blockierwindung zu tief im Gewinde des zu sichernden Gewindebolzens ein. Dadurch würde der Außendurchmesser von Gewindebolzen und Montiersicherung so klein im Vergleich zum Durchmesser des Durchgangslochs im Bauteil, dass der Gewindebolzen mit Montiersicherung aus dem Durchgangsloch gelöst werden kann. Insofern sorgt die konkrete Definition des Drahtdurchmessers der Montiersicherung dafür, dass die Montiersicherung verlässlich auf dem Gewindeschaft anordenbar ist und zudem ihre Haltefunktion innerhalb des Durchgangsloches eines Bauteils realisieren kann.

Gemäß einer weiteren bevorzugten Ausgestaltung der erfindungsgemäßen Montiersicherung weist die Haltewindung den inneren Durchmesser $D_H$ aus dem Bereich

$$d_{3,RG;FG} < D_H < d_{2,RG;FG}$$

auf, wobei $d_{3,\,RG;\,FG}$ einen Kerndurchmesser und $d_{2,\,RG;\,FG}$ einen Flankendurchmesser des normierten Regelgewindes RG oder des normierten Feingewindes FG bezeichnet.

Die Haltewindung der Montiersicherung ist vorzugsweise bezogen auf ihren inneren Durchmesser auf das Gewinde des Gewindebolzens abgestimmt. Denn der innere Durchmesser der Haltewindung bestimmt die Befestigung der Montiersicherung auf dem Gewindeschaft. Daher ist es bevorzugt, dass der innere Durchmesser der Haltewindung größer oder gleich einem Kerndurchmesser des Bolzengewindes, nicht aber größer als der Flankendurchmesser des normierten Regelgewindes RG oder des normierten Feingewindes FG auf dem Gewindeschaft des Gewindebolzens ausgebildet ist. Aufgrund dieser gezielten Größeneinstellung des inneren Durchmessers der Haltewindung wird sichergestellt, dass die Montiersicherung reibschlüssig auf dem Bolzenschaft befestigbar ist. Der angegebene Größenbereich des inneren Durchmessers der Haltewindung hebt in diesem Zusammenhang bevorzugt hervor, dass eine federnde Wirkung der Montiersicherung und somit des zu einer Haltewindung gewickelten Drahts Größentoleranzen zwischen der Haltewindung und dem Gewindeschaft des Gewindebolzens ausgleichen kann.

Die erfindungsgemäße Montiersicherung ist bevorzugt aufbauend auf den bekannten geometrischen Daten von normierten Regelgewinden und normierten Feingewinden definiert. Denn die in diesen bekannten geometrischen Daten der normierten Regelgewinde und Feingewinde angegebenen Daten, wie beispielsweise die Steigung des jeweiligen Gewindes, werden herangezogen, um die Montiersicherung zu wickeln bzw. herzustellen. Gemäß einer bevorzugten Ausführungsform vorliegender Erfindung sind die für die Montiersicherung erforderlichen geometrischen Daten des normierten Regelgewindes RG in den DIN-Normen DIN 13-1 und DIN 13-12 und die für die geometrischen Daten des normierten Feingewindes FG in den DIN-Normen DIN 13-2 bis DIN 13-12 definiert. Diese geometrischen Daten für das normierte Regelgewinde RG und die geometrischen Daten für das normierte Feingewinde FG legen die Steigung $P_{RG;\,FG}$, den Kerndurchmesser $d_{3,RG;\,FG}$ sowie den Flankendurchmesser $d_{2,\,RG;\,FG}$ fest.

Die Montiersicherung ist bevorzugt in ihrer Konstruktion und Größe auf Gewindebolzen abgestimmt, deren Gewindeschaft ein normiertes Regelgewinde RG oder ein normiertes Feingewinde FG aufweist. Da die geometrischen Daten für derartige Regelgewinde RG oder derartige normierte Feingewinde FG basierend auf den öffentlich zugänglichen DIN-Normen bekannt sind, ist die Konstruktion der Montiersicherung aufbauend auf diese bekannten geometrischen Daten der normierten Gewinde definiert. Denn den genannten DIN-Normen lassen sich für die unterschiedlichsten Größenanforderungen bzw. Größen eines Gewindebolzens den entsprechenden geometrischen Daten des Gewindes auf dem Bolzenschaft entnehmen, so dass eine Montiersicherung aufbauend auf diesen geometrischen Daten gewickelt werden kann.

Gemäß einer weiteren bevorzugten Ausgestaltung vorliegender erfindungsgemäßer Montiersicherung sind die mindestens eine Haltewindung und die Übergangswindung auf Block gewickelt, so dass in axialer Richtung zueinander benachbarte Windungen zumindest teilweise aneinander anliegen.

Das Wickeln der Haltewindung und der Übergangswindung auf Block hat den Vorteil, dass die benachbarten Windungen der zylinderförmigen Wendel der Montiersicherung aneinander anliegen. Dieses Anliegen verhindert, dass sich mehrere Montiersicherungen ineinander verhaken können. Denn das Wickeln auf Block vermeidet, dass Windungen einer zweiten Montiersicherung in der ersten Montiersicherung in die Abstände zwischen den Windungen eingreifen und sich dort verhaken können. Gleichzeitig stellt das Wickeln auf Block aufgrund der Federkraft des gewickelten Drahts der Montiersicherung sicher, dass sich die Montiersicherung in dem Gewindegang des Gewindebolzens anordnen kann, um dort ihre Funktion zu realisieren.

Gemäß einer weiteren bevorzugten Ausgestaltung vorliegender Erfindung erstrecken sich die Übergangswindung und die Blockierwindung über einen Winkelbereich von 150° bis 300° um die Mittellängsachse der Wendel der Montiersicherung, vorzugsweise über einen Winkel von 225°. Diese Größeneinstellung der Übergangswindung und der Blockierwindung hat sich als vorteilhaft erwiesen, um den verlässlichen Halt und eine verlässliche Funktion der Montiersicherung auf dem Gewindebolzen zu gewährleisten.

Vorliegende Erfindung umfasst zudem einen Gewindebolzen mit einem Gewindeschaft und einem Bolzenkopf, der ein normiertes Regelgewinde RG oder ein normiertes Feingewinde FG aufweist, sowie eine Montiersicherung gemäß einer der oben beschriebenen bevorzugten Ausgestaltungen, die verliersicher auf dem Gewindeschaft des Gewindebolzens mit dem zweiten Ende der zylinderförmigen Wendel benachbart zum Bolzenkopf angeordnet ist.

Gemäß einer bevorzugten Ausgestaltung des Gewindebolzens mit Montiersicherung ist das normierte Regelgewinde RG oder das normierte Feingewinde FG auf dem Gewindeschaft durch den normierten Nenndurchmesser $d_{RG;FG}$ und die normierte Steigung $P_{RG;FG}$ definiert und der Gewindeschaft weist in Kombination mit der Montiersicherung einen montierten Außendurchmesser $d_M$ aus dem Bereich

$$d_M = d_{RG;FG} - \frac{7}{8}\sqrt{3} * P_{RG;FG} + 3 * D_{Draht}$$

auf, in dem sich der Drahtdurchmesser $D_{Draht}$ der Montiersicherung über den Bereich

$$\sqrt{3} * \frac{7}{24} * P_{RG;FG} \leq D_{Draht} \leq \sqrt{3}\frac{7}{16} * P_{RG;FG}$$

erstreckt.

Erfindungsgemäß bevorzugt weist der Gewindebolzen in Kombination mit der Montiersicherung einen definierten Außendurchmesser $d_M$ auf. Denn eine derartige Definition des Außendurchmessers bildet die Grundlage dafür, dass der Gewindebolzen mit Montiersicherung und das Durchgangsloch im Bauteil aufeinander abgestimmt werden können. Nur so lässt sich der Innendurchmesser des Durchgangslochs im Bauteil, in welchem der Gewindebolzen über die Montiersicherung auszugssicher gehalten werden soll, passend in seiner Größe bereitstellen. Dabei ergibt sich der Außendurchmesser $d_M$ von Gewindebolzen und Montiersicherung aufbauend auf den oben definierten Geometriedaten des normierten Gewindes auf dem Gewindeschaft sowie der geometrischen Daten der Montiersicherung.

Gemäß einer weiteren bevorzugten Ausgestaltung vorliegender Erfindung ist ein Draht der Montiersicherung so tief in radialer Richtung in einem Gewindetal des Gewindebolzens aufgenommen ist, dass ein Mittelpunkt des Drahts der Montiersicherung maximal auf einer Höhe von einander direkt gegenüberliegenden Gewindespitzen des Gewindebolzens oder radial tiefer in dem Gewindetal angeordnet ist.

Vorzugsweise ist der Drahtdurchmesser der Montiersicherung in der Größe auf das Gewinde des Gewindebolzens abgestimmt. Das bedeutet, dass die Gewindegeometrie in den vorhandenen Gewindetälern des Gewindeschafts einen Aufnahmeraum für den Draht der Montiersicherung bereitstellt. Denn in den Gewindetälern ist die Montiersicherung, also der jeweils dort verlaufende Drahtabschnitt, so tief aufgenommen, dass der Mittelpunkt des Drahts maximal auf der radialen Höhe der benachbarten Gewindespitzen oder maximal auf Höhe einer axial verlaufenden Verbindungslinie zwischen zwei über ein Gewindetal zueinander benachbarten Gewindespitzen angeordnet ist. Zudem ist es bevorzugt, dass die Montiersicherung in radialer Richtung tiefer in dem Gewindetal angeordnet ist. Mit Hilfe der geometrischen Abstimmung zwischen dem Drahtdurchmesser der Montiersicherung und der Gewindegeometrie ist bevorzugt garantiert, dass der Draht der Montiersicherung durch den Rand einer Bauteilöffnung nicht vom Gewindeschaft abgestreift oder auf diesem axial verschoben werden kann.

Vorliegende Erfindung umfasst zudem ein Bauteil mit einem im Querschnitt runden Durchgangsloch, in dem der Gewindebolzen mit Montiersicherung gemäß der oben beschriebenen bevorzugten Ausgestaltungen auszugssicher angeordnet ist.

Das erfindungsgemäß bevorzugte Bauteil weist das Durchgangsloch mit einem Lochdurchmesser $D_L$ aus dem Bereich

$$d_M < D_L \leq d_{RG;FG} - \frac{7}{8}\sqrt{3} * P_{RG;FG} + 4 * D_{Draht}$$

auf mit $d_M$ als montierten Außendurchmesser aus dem Bereich von

$$d_M = d_{RG;FG} - \frac{7}{8}\sqrt{3} * P_{RG;FG} + 3 * D_{Draht}$$

wobei der Drahtdurchmesser $D_{Draht}$ der Montiersicherung in dem Bereich

$$\sqrt{3} * \frac{7}{24} * P_{RG;FG} \leq D_{Draht} \leq \sqrt{3}\frac{7}{16} * P_{RG;FG}$$

liegt.

Anhand der obigen formelmäßigen Beschreibung der Dimensionierung des Lochdurchmessers $D_L$ des Durchgangslochs ist erkennbar, dass der Lochdurchmesser $D_L$ in enger Abstimmung mit dem Außendurchmesser des Gewindebolzens mit Montiersicherung definiert ist. Entsprechend muss der Lochdurchmesser $D_L$ größer sein als der Außendurchmesser von Gewindebolzen mit Montiersicherung an der Stelle, wo die Montiersicherung auf dem Gewindeschaft sitzt. Da aber die Blockierwindung in überlagernder Anordnung auf der Übergangswindung und/oder der Haltewindung die oben beschriebene Blockierwindung der Montiersicherung im Durchgangsloch des Bauteils realisiert, ist der Lochdurchmesser $D_L$ des Durchgangslochs in Abhängigkeit vom Durchmesser des Drahts der Montiersicherung definiert. Denn allein diese überlagernde Blockierwindung gewährleistet die Auszugssicherheit des Gewindebolzens mit Montiersicherung aus dem Durchgangsloch. Für ein zusätzliches Verständnis der beschriebenen Konstruktion wird bevorzugt auf DIN EN 20273 verwiesen. Darin sind Durchgangslöcher für Schrauben in Bauteilen beschrieben. Entsprechend ist die DIN EN 20273 durch Bezugnahme im Hinblick auf die Dimensionierung von Durchgangslöchern aufgenommen.

Gemäß einer weiteren bevorzugten Ausführungsform vorliegender Erfindung ist das Bauteil mit Hilfe des Gewindebolzens mit Montiersicherung an einem weiteren Bauteil befestigt. Zu diesem Zweck weist das weitere Bauteil ein Durchgangsloch auf, welches der Gewindebolzen durchläuft, um mit einer Mutter befestigt zu sein. Gemäß einer alternativen Ausgestaltung weist das weitere Bauteil eine Gewindeöffnung oder einen Gewindeflansch jeweils mit Innengewinde passend zum Gewindebolzen auf. In dieser Gewindeöffnung oder diesem Gewindeflansch ist der Gewindebolzen mit Montiersicherung befestigt.

Bevorzugt weist die oben genannte Mutter oder die Gewindeöffnung oder der Gewindeflansch eine Eingangsfase auf. Die Eingangsfase vergrößert bevorzugt einen Durchmesser einer Eingangsöffnung der Gewindeöffnung, der Mutter oder des Gewindeflansches. Der in der Eingangsfase vorhandene Freiraum dient bevorzugt der Aufnahme der Montiersicherung in der hergestellten Verbindung zwischen den Bauteilen, so dass die Montiersicherung nicht in einer Trennfuge zwischen dem Bauteil und einem weiteren Bauteil gequetscht wird und diese Verbindung nicht behindert. Es ist ebenfalls bevorzugt, die durch die Eingangsfase bereitgestellte aufnehmende Senkung für die Montiersicherung am Bauteil oder am Bauteil und am weiteren Bauteil vorzusehen.

Vorliegende Erfindung umfasst zudem ein Herstellungsverfahren einer Montiersicherung, insbesondere der Montiersicherung gemäß der oben beschriebenen Ausführungsformen, welches die folgenden Schritte aufweist: Wickeln eines Drahts zu einer zylinderförmigen Wendel bestehend aus einer Mehrzahl schraubenförmig gewickelter Windungen des Drahts, wobei eine zylinderförmige Wendel bestehend aus einer Mehrzahl schraubenförmig gewickelter Windungen eines Drahts gebildet wird, die in Steigungsrichtung der Wendel ein erstes Ende und ein zweites Ende aufweist, beginnend am ersten Ende der Wendel ist mindestens eine Haltewindung gewickelt, die sich über einen Winkelbereich von größer 360° um eine Mittellängsachse der Wendel erstreckt und eine positive Steigung $P_H$ sowie einen inneren Durchmesser $D_H$ aufweist, anschließend an die Haltewindung ist eine Übergangswindung gewickelt, die sich über einen Winkelbereich von mindestens 65° um die Mittellängsachse der Wendel erstreckt und im Vergleich zur Haltewindung eine kleinere Steigung $P_U$ sowie einen zunehmenden inneren Durchmesser $D_U$ aufweist, und angrenzend an das zweite Ende der Wendel ist eine Blockierwindung gewickelt, die sich über einen Winkelbereich von mindestens 65° um die Mittellängsachse der Wendel erstreckt und eine im Vergleich zur Haltewindungen negative Steigung $P_B$ aufweist, so dass zumindest ein Endbereich der Blockierwindung in axialer Richtung der Mittellängsachse zwischen einer Einsteckposition und einer Blockierposition elastisch versetzbar ist, wobei der Endbereich der Blockierwindung in der Einsteckposition das zweite Ende der Wendel bildet und in der Blockierposition radial auswärts von der Übergangswindung und/oder der Haltewindung angeordnet ist.

Zudem umfasst vorliegende Erfindung ein Montageverfahren eines Gewindebolzens mit einer Montiersicherung gemäß obiger bevorzugter Ausgestaltungen in einem Durchgangsloch eines Bauteils, welches ebenfalls oben beschrieben ist. Dieses Montageverfahren weist die folgenden Schritte auf:

Einstecken des Gewindebolzens mit Montiersicherung in das Durchgangsloch des Bauteils, wobei ein Endbereich der Blockierwindung das zweite Ende der Wendel benachbart zum Bolzenkopf bildet, und

elastisches Zurückfedern zumindest eines Endbereichs der Blockierwindung in Richtung des ersten Endes der Wendel, sodass der Endbereich der Blockierwindung radial auswärts von der Übergangswindung und/oder der Haltebindung angeordnet ist.

### 4. Detaillierte Beschreibung der begleitenden Zeichnungen

Die bevorzugten Ausführungsformen vorliegender Erfindung werden unter Bezugnahme auf die begleitende Zeichnung näher erläutert. Es zeigen:

Figur 1        eine perspektivische Ansicht einer bevorzugten Ausführungsform der erfindungsgemäßen Montiersicherung,

Figur 2        eine Seitenansicht der Montiersicherung aus Figur 1,

Figur 3        eine Draufsicht auf eine bevorzugte Ausführungsform der erfindungsgemäßen Montiersicherung,

Figur 4        eine seitliche Schnittdarstellung des bevorzugten Gewindebolzens,

Figur 5        eine bevorzugte seitliche Schnittdarstellung der geometrischen Daten eines Außengewindes,

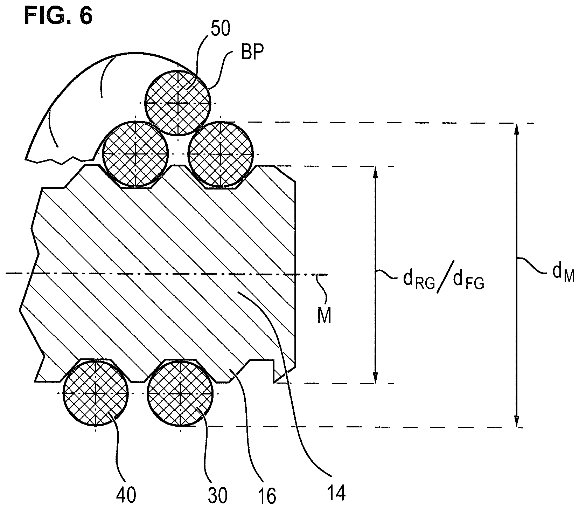

Figur 6        eine weitere seitliche Schnittdarstellung eines Gewindeschafts des Gewindebolzens mit darauf installierter Montiersicherung, in der sich die Blockierwindung in einer Blockierposition befindet,

Figur 7 a-d        einzelne Sequenzen der Installation des Gewindebolzens mit Montiersicherung in einem Durchgangsloch eines Bauteils sowie der Halt des Gewindebolzens mit Montiersicherung in dem Durchgangsloch nach der Installation mithilfe der erfindungsgemäß bevorzugten Montiersicherung,

Figur 8        eine Veranschaulichung der geometrischen Daten in Bezug auf die Lage des Drahts der Montiersicherung im Gewindegang des Gewindeschafts,

Figur 9        ein bevorzugtes Bauteil mit einem bevorzugten Durchgangsloch, in welchem der Gewindebolzen mit Montiersicherung einsteckbar und auszugssicher anordenbar ist,

Figur 10        eine schematische Darstellung eines Bauteils mit Durchgangsloch, in welchem der Gewindebolzen mit Montiersicherung auszugssicher angeordnet ist, und ein weiteres Bauteil mit Gewindeflansch zum Einschrauben und Befestigen des Gewindebolzens, wobei die Montiersicherung im befestigten Zustand des Bauteils am weiteren Bauteil in einer Eingangsfase des Gewindeflansches aufnehmbar ist

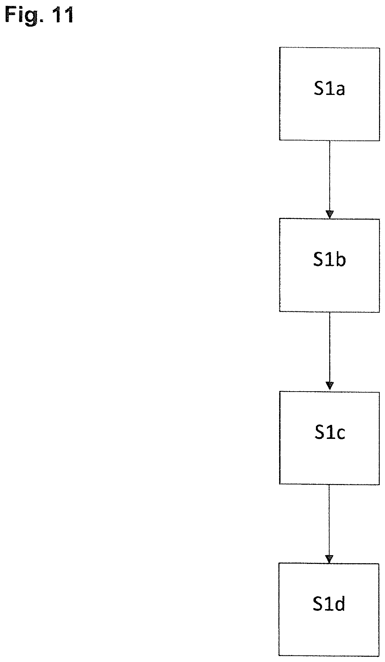

Figur 11        ein Flussdiagramm einer bevorzugten Ausführungsform des erfindungsgemäßen Herstellungsverfahrens der Montiersicherung und

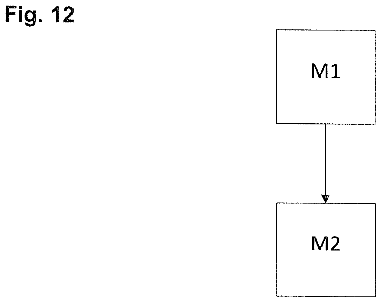

Figur 12        ein Flussdiagramm einer bevorzugten Ausführungsform des erfindungsgemäß bevorzugten Installationsverfahrens .

### 5. Detaillierte Beschreibung der bevorzugten Ausführungsformen

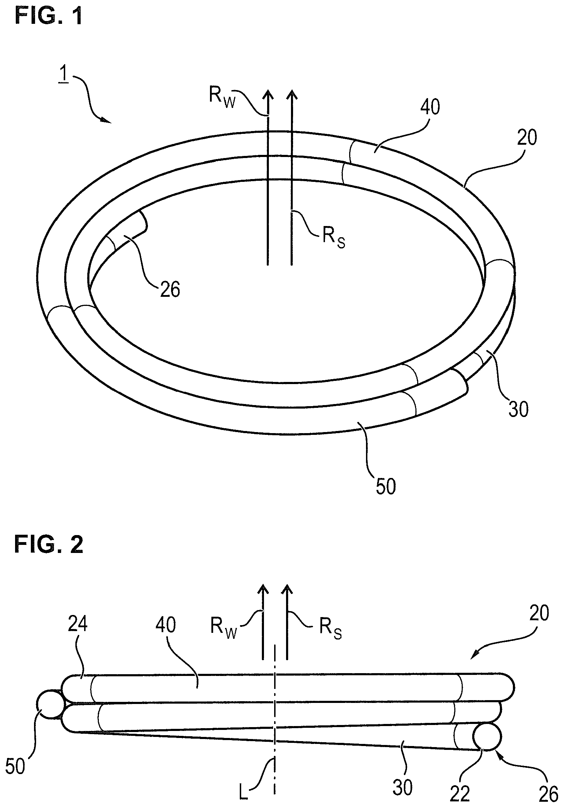

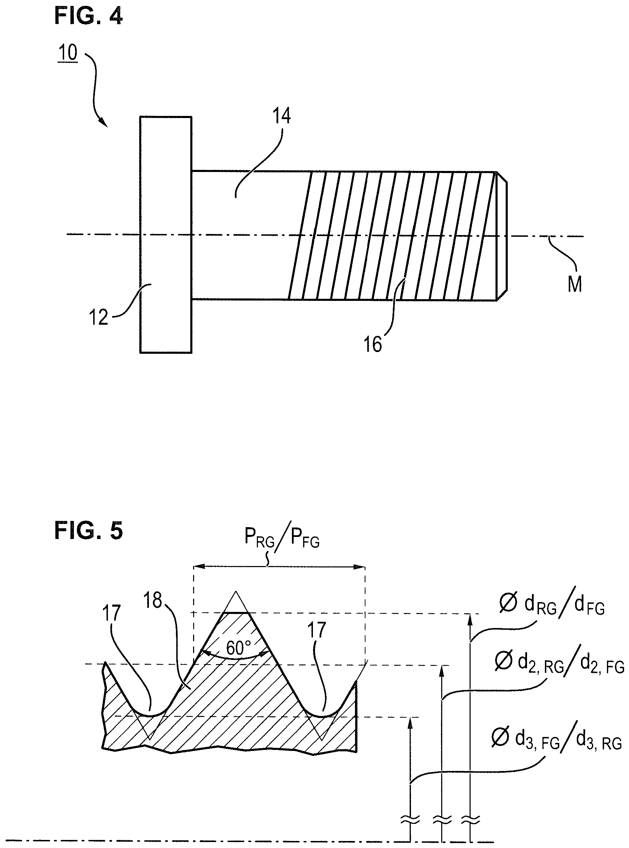

In den Figuren 1 bis 3 sind verschiedene Ansichten einer bevorzugten Ausführungsform der erfindungsgemäßen Montiersicherung 1 gezeigt. Die Montiersicherung 1 ist vorzugsweise angepasst, um auf einem Gewindebolzen 10 mit einem Bolzenkopf 12, einem Gewindeschaft 14 und einem Standardgewinde 16 angeordnet zu werden (siehe Figur 4). Das Standardgewinde 16, welches rechtsgängig oder linksgängig sein kann, ist ein normiertes Regelgewinde RG oder ein normiertes Feingewinde FG. Die geometrischen Daten des normierten Standardgewindes 16 sind in bekannten DIN-Normen festgelegt, so dass bevorzugt die Montiersicherung 1 auf Grundlage der normierten Geometriedaten bereitgestellt ist.

Vorzugsweise sind die geometrischen Daten des normierten Regelgewindes RG, die auch als Nennmaße bezeichnet werden, in den DIN-Normen DIN 13-1 und DIN 13-12 festgelegt. Zu den geometrischen Daten zur Beschreibung des normierten Regelgewindes RG gehören der Nenndurchmesser $d_{RG}$, die Steigung $P_{RG}$, der Flankendurchmesser $d_{2, RG}$ und der Kerndurchmesser $d_{3, RG}$. Diese geometrischen Daten definieren auch ein normiertes Feingewinde FG. Beispielgebend zeigt Tabelle 1 einen Auszug der geometrischen Daten für das Regelgewinde RG gemäß DIN 13-1. In Tabelle 1 ist ein Bereich für den Nenndurchmesser $d_{RG}$ von 1 mm $\leq d_{RG} \leq$ 18 mm in Kombination mit Werten für die Steigung $P_{RG}$ im Bereich von 0,25 mm $\leq P_{RG} \leq$ 2,5 mm definiert.

Zudem zeigt Tabelle 2 einen Auszug der geometrischen Daten für das Feingewinde FG gemäß DIN 13-4. Tabelle 2 bezieht sich nur auf Werte des Nenndurchmesser $d_{FG}$, des Flankendurchmessers $d_{2, FG}$ und des Kerndurchmessers $d_{3, FG}$ für eine Steigung $P_{FG}$ von 0,75 mm.

Zur Definition und Erläuterung des Regelgewindes RG wird auf die DIN 13-1 und DIN 13-12 Bezug genommen und diese durch diese Bezugnahme aufgenommen. Das gleiche gilt für die geometrischen Daten des Feingewindes FG, für die auf die DIN Normen DIN 13-2 bis DIN 13-12 Bezug genommen wird und diese dadurch hierin aufgenommen sind. Maße in Millimeter

Tabelle 1: Geometrische Daten für ein Regelgewinde RG des Gewindeschafts 14 mit unterschiedlichen Steigungen $P_{RG}$ gemäß DIN 13-1 aus dem Jahr 1999 (Auszug)

| Gewinde-Nenndurchmesser $d_{RG}$ | | | Steigung | Flankendurchmesser | Kerndurchmesser | | Gewindetiefe | | Rundung |
|---|---|---|---|---|---|---|---|---|---|
| Reihe 1 | Reihe 2 | Reihe 3 | $P_{RG}$ | $d_{2,\,RG}$ | $d_{3,\,RG}$ | $D_3$ | $h_3$ | $H_1$ | $R = \frac{H}{6}$ |
| 1 | 1,1 | | 0,25 | 0,838 | 0,693 | 0,729 | 0,153 | 0,135 | 0,036 |
| | | | 0,25 | 0,938 | 0,793 | 0,829 | 0,153 | 0,135 | 0,036 |
| | 1,2 | | 0,25 | 1,038 | 0,893 | 0,929 | 0,153 | 0,135 | 0,036 |
| 1,6 | 1,4 | | 0,3 | 1.205 | 1,032 | 1,075 | 0,184 | 0,162 | 0,043 |
| | | | 0,35 | 1,373 | 1,171 | 1,221 | 0,215 | 0,189 | 0,051 |
| | 1,8 | | 0,35 | 1,573 | 1,371 | 1,421 | 0,215 | 0,189 | 0,051 |
| 2 | 2,2 | | 0,4 | 1,740 | 1,509 | 1,567 | 0,245 | 0,217 | 0,058 |
| | | | 0,45 | 1,908 | 1,648 | 1,713 | 0,276 | 0,244 | 0,065 |
| 2,5 | | | 0,45 | 2,208 | 1,948 | 2,013 | 0,276 | 0,244 | 0,065 |
| 3 | 3,5 | | 0,5 | 2,675 | 2,387 | 2,459 | 0,307 | 0,271 | 0,072 |
| | | | 0,6 | 3,110 | 2,764 | 2,850 | 0,368 | 0,325 | 0,087 |
| 4 | | | 0,7 | 3,545 | 3,141 | 3,242 | 0,429 | 0,379 | 0,101 |
| | 4,5 | | 0,75 | 4,013 | 3,580 | 3,688 | 0,460 | 0,406 | 0,108 |
| 5 | | | 0,8 | 4,480 | 4,019 | 4.134 | 0,491 | 0,433 | 0,115 |
| 6 | | | 1 | 5,350 | 4,773 | 4,917 | 0,613 | 0,541 | 0,144 |
| 8 | 7 | 9 | 1 | 6,350 | 5,773 | 5,917 | 0.613 | 0,541 | 0,144 |
| | | | 1,25 | 7,188 | 6,466 | 6,647 | 0,767 | 0,677 | 0,180 |
| | | | 1,25 | 8,168 | 7,466 | 7,647 | 0,767 | 0,677 | 0,180 |
| 10 | | 11 | 1,5 | 9,026 | 8,160 | 8,376 | 0,920 | 0,812 | 0,217 |
| | | | 1,5 | 10,026 | 9,160 | 9,376 | 0,920 | 0,812 | 0,217 |
| 12 | | | 1,75 | 10,863 | 9,853 | 10,106 | 1,074 | 0,947 | 0,253 |
| 16 | 14 | | 2 | 12,701 | 11,546 | 11,835 | 1,227 | 1,083 | 0,289 |
| | | | 2 | 14,701 | 13,546 | 13,835 | 1,227 | 1,083 | 0,289 |
| | 18 | | 2,5 | 16,376 | 14,933 | 15,294 | 1,534 | 1,353 | 0,361 |

Tabelle 2: Geometrische Daten für ein Feingewinde FG des Gewindeschafts 14 mit der Steigung $P_{FG}$=0,75 mm gemäß DIN 13-4 aus dem Jahr 1999 (Auszug)

| | | | | | | Maße in Millimeter |
|---|---|---|---|---|---|---|
| Gewinde-Nenndurchmesser $d_{FG}$ | | | | Flankendurchmesser | Kerndurchmesser | |
| Reihe 1 | Reihe 2 | Reihe 3 | Reihe 4 | $d_{2,FG}$ | $d_{3,FG}$ | $D_1$ |
| 5 | | 5,5 | | 4,513 | 4,080 | 4,188 |
| | | | | 5,013 | 4,580 | 4,688 |
| 6 | | | | 5,513 | 5,080 | 5,188 |
| | 7 | 6,5 | | 6,013 | 5,580 | 5,688 |
| | | | | 6,513 | 6,080 | 6,188 |
| | | 7.5 | | 7,013 | 6,580 | 6,688 |
| 8 | | | | 7,513 | 7,080 | 7,188 |
| | | 8,5 | | 8,013 | 7,580 | 7,688 |
| | | 9 | | 8,513 | 8,080 | 8,188 |
| 10 | | 9,5 | | 9,013 | 8,580 | 8,688 |
| | | | | 9,513 | 9,080 | 9,188 |
| | | 10,5 | | 10,013 | 9,580 | 9,688 |
| 12 | | 11 | | 10,513 | 10,080 | 10,188 |
| | | 11,5 | | 11,013 | 10,580 | 10,688 |
| | | | | 11,513 | 11,080 | 11,188 |
| | | 12,5 | | 12,013 | 11,580 | 11,668 |
| | | 13 | | 12,513 | 12,080 | 12,188 |
| | | 13,5 | | 13,013 | 12,580 | 12,668 |
| | 14 | | | 13,513 | 13,080 | 13,188 |
| | | 14,5 | | 14,013 | 13,580 | 13,688 |
| | | 15 | | 14,513 | 14,080 | 14,188 |
| 16 | 18 | 17 | | 15,513 | 15,080 | 15,188 |
| | | | | 16,513 | 16,080 | 16,188 |
| | | | | 17,513 | 17,080 | 17.188 |

Zur Veranschaulichung der für das Regelgewinde RG und das Feingewinde FG relevanten geometrischen Daten zeigt Figur 5 einen Teilschnitt durch ein Außengewinde. Dazu sind zwei benachbarte Gewindetäler 17 gezeigt, die durch einen Gewindeberg 18 voneinander getrennt sind. Der Gewindeberg 18 wird durch zwei in einem Winkel von 60° zueinander angeordneten Gewindeflanken definiert. Die einander gegenüberliegenden Gewindeflanken jedes Gewindetals 17 sind ebenfalls in einem Winkel von 60° zueinander angeordnet. Wie sich aus der Bemaßung in Figur 5 ergibt, ist ein Ausschnitt aus einem Schnitt entlang der Mittellinie M des Gewindeschafts 14 gezeigt, der bezogen auf Figur 4 oberhalb der Mittellinie M des Gewindes 16 des Gewindeschafts 14 liegt.

Wie aus den Figuren 1 bis 3 hervorgeht, besteht die Montiersicherung 1 aus einer zylinderförmigen Wendel 20. Die zylinderförmigen Wendel 20 wird in einem Herstellungsverfahren aus einem Draht gewickelt (Schritt S1), in dem eine Mehrzahl von schraubenförmig gewickelten Windungen 30, 40, 50 erzeugt wird (Schritt S1a).

Die Wendel 20 weist ein erstes Ende 22 und ein zweites Ende 24 auf. Das erste Ende 22 ist vorzugsweise in einer Wickelrichtung $R_W$ der Wendel 20 oder in Steigungsrichtung $R_S$ einer Anfangswindung 26 der Wendel 20 am Anfang der Wendel 20 angeordnet (siehe Figuren 1, 2). Die Windungen der Wendel 20 zeichnen sich bevorzugt dadurch aus, dass sie durchgehend kreisbogenförmig verlaufen. Das gilt auch bevorzugt für den Anfang und das Ende der Wendel 20.

Die zylinderförmige Gestalt der Wendel 20 ergibt sich aus der Anpassung der Montiersicherung 1 an einen Gewindebolzen mit einem runden Schaftquerschnitt.

Der Draht, aus dem die Montiersicherung 1 gewickelt ist, weist vorzugsweise einen runden Querschnitt auf, wie es in den Figuren 1 bis 3 gezeigt ist. Es ist ebenfalls bevorzugt, einen Draht mit einem elliptischen oder einem rautenförmigen oder einem einseitig abgerundeten Querschnitt zu nutzen. Die unterschiedlichen Querschnittsformen werden in Abhängigkeit davon eingesetzt, um einen Halt der Montiersicherung 1 auf dem Gewinde 16 des Gewindebolzens 10 zu steigern.

Vorzugsweise besteht der Draht der Montiersicherung aus einem federelastischen Werkstoff mit ausreichender Zugfestigkeit. Zudem ist er zum Wickeln mehrerer Windungen geeignet.

Beginnend am ersten Ende 22 der Wendel 20 ist mindestens eine Haltewindung 30 gewickelt. Die Haltewindung 30 hat die Funktion, die Montiersicherung 1 verlässlich auf dem Gewinde 16 des Gewindebolzens 10 festzuhalten. Somit garantiert die mindestens eine Haltewindung 30 die Position der Montiersicherung 1 auf dem Bolzenschaft 14. Zudem garantiert die mindestens eine Haltewindung 30 eine verlässliche Verbindung zwischen der Montiersicherung 1 und dem Gewindebolzen 10, so dass der Gewindebolzen 10 in einem Durchgangsloch 72 eines Bauteils 70 auszugssicher gehalten wird (siehe unten).

Die mindestens eine Haltewindung 30 erstreckt sich um eine Mittellängsachse L der Wendel 20 in einem Winkelbereich von mindestens 360°. Je nach Belastung der Montiersicherung 1, beispielsweise durch ein Gewicht des Gewindebolzens 10 oder durch eine Auszugsbelastung des Gewindebolzens 10 am Durchgangsloch 72 des Bauteils 70, ist es bevorzugt, mehrere Haltewindungen 30 vorzusehen. Die Haltewindung 30 erstreckt sich dann über einen bevorzugt wählbaren Winkelbereich von 360° bis zu 720° oder mehr. So sind beispielsweise bevorzugt 1,5 oder 2 oder 2,5 Haltewindungen 30 beginnend am ersten Ende 22 der Wendel 20 vorzusehen bzw. zu wickeln (Schritt S1b).

Die mindestens eine Haltewindung 30 weist eine positive Steigung $P_H$ sowie einen inneren Durchmesser $D_H$ auf. Die Wahl der Steigung $P_H$ und des inneren Durchmessers $D_H$ gewährleisten eine verlässliche reibschlüssige Verbindung bzw. einen verlässlichen Halt der Haltewindung 30 und damit der Montiersicherung 1 auf dem Gewinde 16 des Gewindebolzens 10.

Anschließend an die mindestens eine Haltewindung 30 mit positiver Steigung $P_H$ ist eine Übergangswindung 40 gewickelt (Schritt S1c) bzw. vorgesehen. Die Übergangswindung 40 stellt vorzugsweise den Zusammenhalt und den Übergang her zwischen der Haltewindung 30 für die Halte- oder Positionierfunktion der Montiersicherung 1 (siehe oben) und einer Blockierwindung 50 für eine Blockierfunktion oder Auszugssicherung der Montiersicherung 1 mit Gewindebolzen 10 (siehe unten).

Die Übergangswindung 40 erstreckt sich bevorzugt über einen Winkelbereich, der nicht eine komplette Windung, also 360°, umfasst. Gemäß der vorliegenden Erfindung verläuft die Übergangswindung 50 in einem Winkelbereich von mindestens 65° um die Mittellängsachse L der Wendel 20. Da die Blockierwindung 50 mit einer negativen Steigung $P_B$ vorgesehen ist, leitet die Übergangswindung 40 einen Steigungsübergang oder einen Steigungswechsel zwischen der positiven Steigung $P_H$ der Haltewindung 30 und der negativen Steigung $P_B$ der Blockierwindung 50 ein. Die Steigung $P_U$ der Übergangswindung 40 ist kleiner als die Steigung $P_H$ der Haltewindung 30 und bevorzugt größer als die Steigung $P_B$ der Blockierwindung 50.

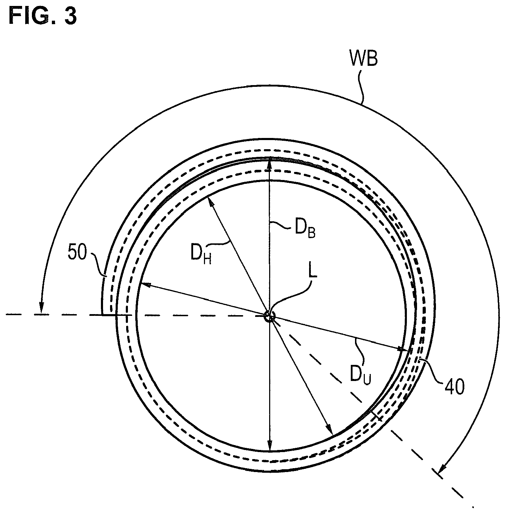

Zudem weist die Übergangswindung 40 im Vergleich zur Haltewindung 30 einen zunehmenden inneren Durchmesser $D_U$ auf. Der zunehmende innere Durchmesser $D_U$ bereitet vor bzw. unterstützt die Blockierfunktion der Blockierwindung 50. Denn für die Blockierfunktion ist die Blockierwindung 50 zumindest teilweise radial außen von zumindest der Übergangswindung 40 und/oder der Haltewindung 30 angeordnet (siehe Figur 3). Dadurch vergrößert vorzugsweise die Blockierwindung 50 der Montiersicherung 1 den Außendurchmesser des Bolzenschafts 14 über einen Innendurchmesser eines Durchgangslochs eines Bauteils hinaus, um den Gewindebolzen 10 mit Montiersicherung 1 auszugssicher und selbsttätig im Durchgangsloch halten zu können.

Angrenzend an das zweite Ende 24 der Wendel 20 und vorzugsweise anschließend an die Übergangswindung 40 ist die Blockierwindung 50 gewickelt und vorgesehen (Schritt S1d). Die Blockierwindung 50 erstreckt sich über einen Winkelbereich von mindestens 65° um die Mittellängsachse L der Wendel 20. Zudem zeichnet sich die Blockierwindung 50 durch eine im Vergleich zur Haltewindung 30 negative Steigung $P_B$ aus. Die negative Steigung $P_B$ der Blockierwindung 50 gewährleistet eine federnde, bevorzugt selbsttätig wirkende, Blockierfunktion der Blockierwindung 50. Denn durch den zunehmenden inneren Durchmesser $D_U$ der Übergangswindung 40, die sich vorzugsweise durch eine weitere Zunahme des inneren Durchmessers $D_B$ der Blockierwindung 50 erhöht, ist die Blockierwindung 50 radial außerhalb der Haltewindung 30 und/oder der Übergangswindung 40 angeordnet. Dies schafft die Voraussetzung für ein federndes Versetzen der Blockierwindung 50 in Richtung der Mittellängsachse L der Wendel 20 bevorzugt radial auswärts von den übrigen Windungen 30, 40 der Wendel 20.

Entsprechend ist es möglich, die Blockierwindung 50 bezogen auf die Mittellängsachse L auf den vorhergegangenen Windungen 30, 40 oder in Steigungsrichtung der Haltewindung 30 neben den vorhergehenden Windungen 30, 40 anzuordnen. Beispielgebend zeigen die Figuren 1 und 2 eine Anordnung der Blockierwindung 50 auf der Haltewindung 30 und der Übergangswindung 40. Figur 3 zeigt die Anordnung der Blockierwindung 50 radial auswärts von der Haltewindung 30 und der Übergangswindung 40. Die negative Steigung $P_B$ der Blockierwindung 50 legt vorzugsweise fest, dass die Blockierwindung 50 radial außerhalb und radial über der Übergangswindung 40 oder der Übergangswindung 40 und der Haltewindung 30 angeordnet ist (siehe Figuren 1 und 2).

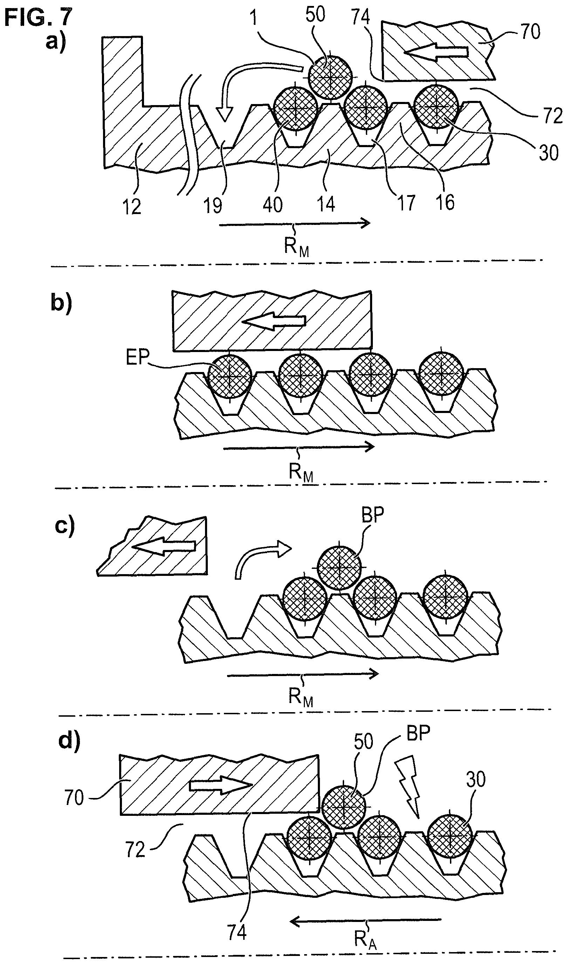

Aufgrund der federnden Eigenschaften des Drahts der Montiersicherung 1 kann die Blockierwindung 50 durch einen Rand 74 des Durchgangslochs 72 eines Bauteils 70 in Steigungsrichtung $R_S$ der Haltewindung 30 federnd versetzt werden, um selbsttätig wieder in die Position radial über der Übergangswindung 40 oder über der Übergangswindung 40 und der Haltewindung 30 zurückzufedern, wenn die Blockierwindung 50 wieder durch den Rand 74 des Durchgangslochs 72 freigegeben worden ist. Somit ist die Blockierwindung 50 zwischen der Einsteckposition EP am Ende 24 der Wendel 20 und der Blockierposition BP radial oberhalb der Haltewindung 30 und der Übergangswindung 40 (siehe Figur 2) federnd versetzbar. Die Einsteckposition EP, die die Eigenschaft der Montiersicherung 1 auf dem Bolzenschaft 14 bezeichnet, in das Durchgangsloch 72 des Bauteils 70 eingesteckt zu werden, ist mit Bezug auf Figur 7b erläutert. Bezugnehmend auf die Figuren 7a-d ist eine Ausschnittsvergrößerung des Bolzenschafts 14 mit Gewinde 16 gezeigt. Auf dem Gewinde 16 ist die Montiersicherung 1 derart angeordnet, dass die Blockierwindung 50 dem Bolzenkopf 12 zugewandt und die Haltewindung 30 dem Bauteil 70 zugewandt sind. Entsprechend ist das zweite Ende 24 der Wendel 20 dem Bolzenkopf 12 zugewandt.

Die auf dem Gewinde 16 angeordnete Montiersicherung 1 umfasst zunächst die Blockierwindung 50 in einer Position radial oberhalb oder radial außerhalb der Übergangswindung 40 und der Haltewindung 30, wie in Figur 7a gezeigt. Diese Position entspricht der Blockierposition BP (siehe Fig. 7c). Zudem ist die Blockierwindung 50 in axialer Richtung des Gewindebolzens 10 betrachtet benachbart zu besetzten Gewindetälern 17 positioniert.

Wird der Gewindebolzen 10 mit Montiersicherung 1 in das Durchgangsloch 72 des Bauteils 70 in Montagerichtung $R_M$ eingesteckt (Schritt M1), bewegt sich der Rand 74 des Durchgangslochs 72 des Bauteils 70 in Steigungsrichtung $R_S$ der Haltewindung 30 auf die Blockierwindung 50 zu (siehe Figur 7a). Da die Blockierwindung 50 federnd in das benachbarte freie Gewindetal 19 durch den Rand 74 versetzt werden kann (siehe Figur 7b), kann der Gewindebolzen 10 mit Montiersicherung 1 in das Durchgangsloch 72 eingesteckt werden, bis die Montiersicherung 1 vollständig das Durchgangsloch 72 passiert hat (siehe Figur 7c).

Da nach dem vollständigen Einstecken bzw. Passieren des Durchgangsloches 72 durch die Montiersicherung 1 der Rand 74 des Durchgangsloches 72 die Blockierwindung 50 nicht mehr in das freie Gewindetal 19 zwingt, federt die Blockierwindung 50 selbsttätig in ihre Ausgangsposition gemäß Figur 7c zurück (Schritt M2). Entsprechend ist durch diesen selbsttätigen Vorgang, der bevorzugt die Grundlage für die Blockierfunktion der Montiersicherung 1 bildet, die Blockierwindung 50 wieder radial oberhalb von besetzten Gewindetälern 17 angeordnet (siehe Figur 7c). Dadurch ist die Auszugssicherheit des Gewindebolzens 10 mit Montiersicherung 1 aus dem Durchgangsloch 72 garantiert, da ein Innendurchmesser des Durchgangsloches 72 kleiner ist als ein Außendurchmesser des Gewindeschafts 14 mit der Blockierwindung 50 in seiner Ausgangsposition.

Wird versucht, den Gewindebolzen 10 in einer Auszugsrichtung $R_A$ aus dem Durchgangsloch 72 des Bauteils 70 zu entfernen (siehe Figur 7d), verhindert die Blockierwindung 50 den Auszug. Denn der Rand 74 des Durchgangsloches 72 versetzt bei einem versuchten Auszug des Gewindebolzens 10 die Blockierwindung 50 in Richtung besetzter Gewindetäler 17 auf dem Bolzenschaft 14. Daraus folgt, dass die Blockierwindung 50 nicht in ein freies Gewindetal 19 ausweichen kann, um den Gewindebolzen 10 mit Montiersicherung 1 durch das Durchgangsloch 72 hindurch freizugeben.

Um den Transport einer Mehrzahl von Montiersicherungen 1 im noch nicht installierten Zustand zu erleichtern, sind vorzugsweise die mindestens eine Haltewindung 30 und die Übergangswindung 40 auf Block gewickelt. Entsprechend liegen vorzugsweise zueinander benachbarte Windungen 30, 40 teilweise oder vollständig radial aneinander an, um eine geschlossene zylindrische Außenwand der Wendel 20 zu bilden.

Gemäß einer weiteren bevorzugten Ausführungsform vorliegender Erfindung erstrecken sich die Übergangswindung 40 und die Blockierwindung 50 über einen bevorzugten Winkelbereich WB von 150° bis 300° um die Mittellängsachse L der Wendel 20. Weiterhin bevorzugt ist ein Winkel von 225° für diesen Winkelbereich WB vorteilhaft (siehe Figur 3).

Die Montiersicherung 1 wird vorzugsweise auf dem Gewindebolzen 10 angeordnet, der auf seinem Gewindeschaft 14 ein normiertes Regelgewinde RG oder ein normiertes Feingewinde FG gemäß obiger geometrischer Daten der DIN-Normen oder verwandter bzw. analoger Normen anderer geometrischer Systeme aufweist.

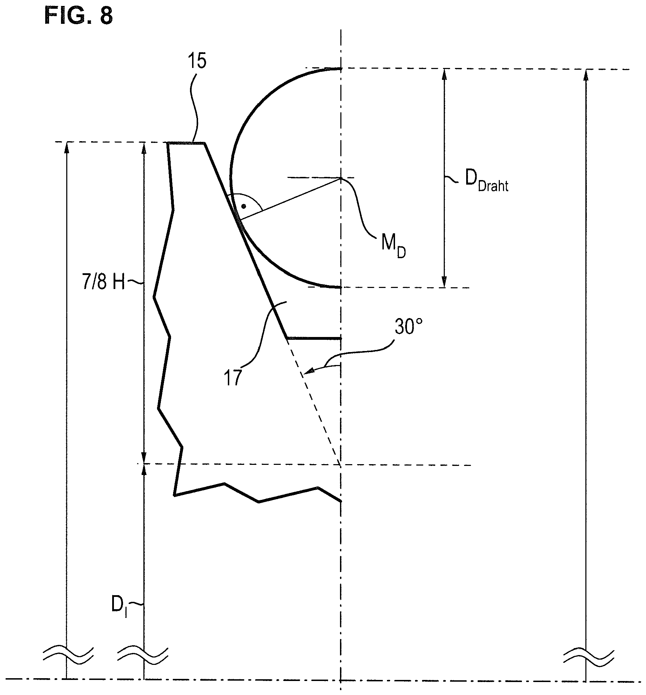

Die bekannten geometrischen Daten des Regelgewindes RG oder des Feingewindes FG auf dem Gewindeschaft 14 unterstützen eine Dimensionierung des Durchmessers des Drahts der Montiersicherung 1. Es hat sich als vorteilhaft erwiesen, dass der Drahtdurchmesser $D_{Draht}$ so eingestellt sein muss, dass gerade die Haltewindung 30 verlässlich im Gewindetal 17 des Gewindes 16 aufgenommen ist. Andernfalls besteht die Gefahr, dass die Montiersicherung 1 vom Gewindeschaft 14 gelöst bzw. abgestreift wird. Daher ist es erfindungsgemäß bevorzugt, dass der Draht der Haltewindung 30 angeordnet in einem Gewindetal 17 des Gewindes 16 mit seinem Mittelpunkt $M_D$ nicht oberhalb der Gewindespitzen 15 des Gewindes 16 angeordnet ist. Entsprechend ist der Abstand zwischen zwei einander gegenüberliegenden und ein Gewindetal 17 bildenden Gewindeflanken an den Gewindespitzen 15, also zwischen zwei Punkten auf den Gewindeflanken in gleichem radialem Abstand zur Mittellängsachse M des Gewindeschafts 14, größer oder gleich dem Drahtdurchmesser $D_{Draht}$. Dadurch wird mindestens die Hälfte des Drahtquerschnitts zwischen den Gewindeflanken gehalten, wie es in Figur 8 schematisch dargestellt ist. Mit anderen Worten ausgedrückt wird der Draht der Montiersicherung 1 vorzugsweise so tief in radialer Richtung in dem Gewindetal 17 aufgenommen, dass der Mittelpunkt des Drahts der Montiersicherung 1 maximal auf der Höhe der Gewindespitzen oder radial tiefer im Gewindetal 17 angeordnet ist. Vorzugsweise ist der Abstand zwischen den Gewindespitzen 15 an den einander gegenüberliegenden und ein Gewindetal 17 bildenden Gewindeflanken größer als der Drahtdurchmesser $D_{Draht}$, so dass der Draht das Gewindetal 17 für die Aufnahme einer Drahtwindung blockiert und vorzugsweise nur mit einem Anteil von ≤48 %, bevorzugt einem Anteil aus dem Bereich von 45 % bis 15 %, des Drahtdurchmessers $D_{Draht}$ in radialer Richtung über die Gewindespitzen 15 hinaus ragt. Die anderen Figuren geben diesen geometrischen Zusammenhang nicht wieder, da sie nur schematisch die Kombination des Gewindeschafts und der Montiersicherung wiedergeben.

Da der Gewindebolzen 10 vorzugsweise ein normiertes Regelgewinde RG der Steigung $P_{RG}$ oder ein normiertes Feingewinde FG der Steigung $P_{FG}$ aufweist, ergibt sich daraus ein bevorzugter Durchmesserbereich für den Drahtdurchmesser $D_{Draht}$ gemäß

$$\sqrt{3} * \frac{7}{24} * P_{RG;FG} \leq D_{Draht} \leq \sqrt{3} \frac{7}{16} * P_{RG;FG}$$

wobei $P_{RG;FG}$ eine Steigung eines normierten Regelgewindes RG oder eines normierten Feingewindes FG bezeichnet. Zudem wird die Haltewindung 30 mit einem definierten inneren Durchmesser $D_H$ gewickelt, damit der Halt auf dem Gewindeschaft 14 gewährleistet ist. Auch hier ist der innere Durchmesser $D_H$ in Bezug auf die normierten geometrischen Daten eines Regelgewindes RG oder eines Feingewindes FG definiert (siehe oben). Es ergibt sich als Wertebereich für den inneren Durchmesser $D_H$

$$d_{3,RG;FG} < D_H < d_{2,RG;FG}$$

wobei $d_{3,RG;FG}$ einen Kerndurchmesser und $d_{2,RG;FG}$ einen Flankendurchmesser des normierten Regelgewindes RG oder des normierten Feingewindes FG bezeichnet.

Sofern der Gewindebolzen 10 bevorzugt das normierte Feingewinde FG oder das normierte Regelgewinde RG aufweist, ist das Gewinde 16 des Gewindeschafts 14 durch die normierten Nenndurchmesser $D_{RG}$ oder $D_{FG}$ sowie die normierte Steigung $P_{RG}$ oder $P_{FG}$ definiert. Daraus ergibt sich ein montierter Außendurchmesser $d_M$ für den Bolzenschaft 14 mit darauf angeordneter Montiersicherung 1 gemäß

$$d_M = d_{RG;FG} - \frac{7}{8}\sqrt{3} * P_{RG;FG} + 3 * D_{Draht}.$$

Der Drahtdurchmesser der Montiersicherung 1 erstreckt sich über den Bereich

$$\sqrt{3} * \frac{7}{24} * P_{RG;FG} \leq D_{Draht} \leq \sqrt{3} \frac{7}{16} * P_{RG;FG}.$$

Aus obigen Dimensionen des Gewindeschafts 14 mit Montiertsicherung 1 ergibt sich ein bevorzugter Durchmesser $D_L$ des Durchgangsloches 72 des Bauteils 70, in welchem der Gewindebolzen 10 mit Montiersicherung 1 auszugssicher gehalten wird. Für den Durchmesser $D_L$ des Durchgangslochs 72 gilt:

$$d_M < D_L \leq d_{RG;FG} - \frac{7}{8}\sqrt{3} * P_{RG;FG} + 4 * D_{Draht}$$

mit $d_M$ als montierten Außendurchmesser aus dem Bereich von

$$d_M = d_{RG;FG} - \frac{7}{8}\sqrt{3} * P_{RG;FG} + 3 * D_{Draht}$$

wobei der Drahtdurchmesser $D_{Draht}$ der Montiersicherung 1 in dem Bereich

$$\sqrt{3} * \frac{7}{24} * P_{RG;FG} \leq D_{Draht} \leq \sqrt{3} \frac{7}{16} * P_{RG;FG}$$

liegt.

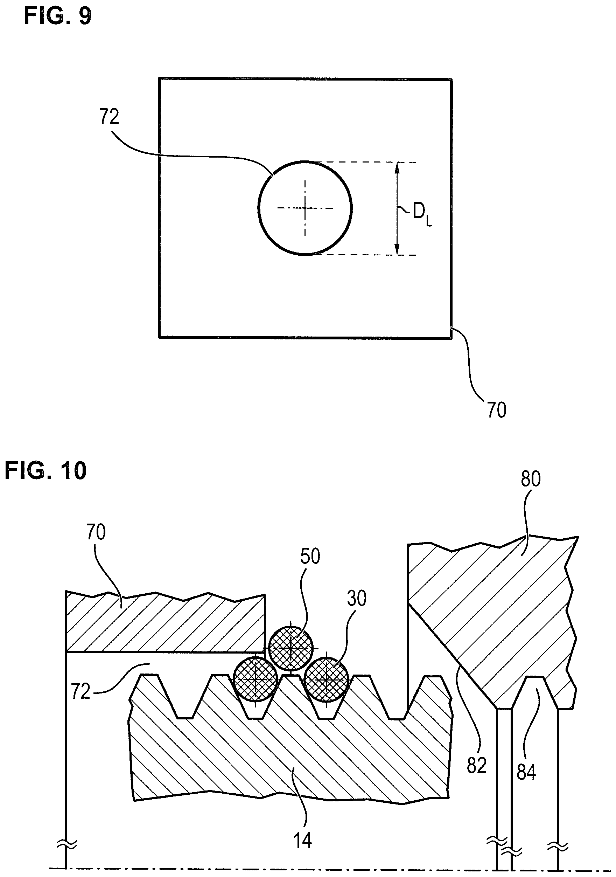

In Figur 10 ist eine bevorzugte schematische Darstellung einer Vorstufe einer Befestigungssituation des Bauteils 70 an einem bevorzugten Gewindeflansch 80 eines weiteren Bauteils (nicht gezeigt) dargestellt. Diese schematische Darstellung betrifft somit die Situation, in der der Gewindebolzen 70, der über die Montiersicherung 1 im Durchgangsloch 72 des Bauteils 70 gesichert gehalten ist, an mindestens einem weiteren Bauteil befestigt werden soll. Zu diesem Zweck weist das weitere Bauteil ein Durchgangsloch oder einen Gewindeflansch 80 aus. Sollte nur ein Durchgangsloch im weiteren Bauteil vorgesehen sein, wird vorzugsweise der Gewindebolzen 14 mit einer Mutter (nicht gezeigt) verschraubt. In diesem Fall weist die Mutter eine Eingangsfase in die Gewindeöffnung auf, wie sie unten näher in Bezug auf den Gewindeflansch 80 beschrieben ist. Diese Eingangsfase stellt angrenzend an eine Eintrittsöffnung des Innengewindekanals der Mutter ein Aufnahmevolumen für die Montiersicherung 1 bereit, so dass diese nicht die herzustellende Verbindung behindert.

Figur 10 zeigt schematisch ein weiteres Bauteil mit einem Gewindeflansch 80, in dessen Gewinde 84 der Gewindebolzen 14 einschraubbar und daher das Bauteil 70 am weiteren Bauteil befestigbar ist. Wird der Gewindebolzen 14 in den Gewindeflansch 80 eingeschraubt, nimmt die Eingangsfase 82 die Montiersicherung 1 auf. Dadurch ist bevorzugt sichergestellt, dass die Montiersicherung nicht zwischen dem Bauteil 70 und einem weiteren Bauteil geklemmt wird und eine Verbindung zwischen diesen behindert.

Es ist ebenfalls bevorzugt, dass das weitere Bauteil unter dem Bezugszeichen 80 veranschaulicht ist. In diesem Fall weist das weitere Bauteil 80 eine Befestigungsöffnung mit einem Innengewinde 84 und einer Eingangsfase 82 angrenzend an den Eingang der Befestigungsöffnung gesehen in Gangrichtung des Innengewindes 84 auf.

Bezugszeichenliste

| | |
|---|---|
| 1 | Montiersicherung |
| 10 | Gewindebolzen |
| 12 | Bolzenkopf |
| 14 | Gewindeschaft |
| 16 | normiertes Standardgewinde in Form eines Regelgewindes RG oder eines Feingewindes FG |
| 17 | Gewindetal |
| 18 | Gewindeberg |
| 19 | freies Gewindetal |
| 20 | Wendel |
| 22 | erstes Ende der Wendel |
| 24 | zweites Ende der Wendel 20 |
| 26 | Anfangswindung der Wendel 20 |
| 30 | Haltewindung |
| 40 | Übergangswindung |
| 50 | Blockierwindung |
| 70 | Bauteil |
| 73 | Durchgangsloch im Bauteil 70 |
| 74 | Rand des Durchgangslochs 72 im Bauteil 70 |
| 80 | Gewindeflansch oder weiteres Bauteil |
| 82 | Eingangsfase am Gewindeflansch oder einer Befestigungsöffnung des weiteren Bauteils 80 |
| 84 | Innengewinde des Gewindeflansches 80 oder der Befestigungsöffnung 80 |

| | |
|---|---|
| $d_{RG}$ | Nenndurchmesser des Regelgewindes RG |
| $d_{FG}$ | Nenndurchmesser des Feingewindes FG |
| $P_{RG}$ | Steigung des Regelgewindes |
| $P_{SG}$ | Steigung des Feingewindes |
| $d_{2,RG}$ | Flankendurchmesser des Regelgewindes |
| $d_{2,FG}$ | Flankendurchmesser des Feingewindes |
| $d_{3,RG}$ | Kerndurchmesser des Regelgewindes |
| $d_{3,FG}$ | Kerndurchmesser des Feingewindes |
| $R_W$ | Wickelrichtung |
| $R_S$ | Steigungsrichtung |
| L | Mittellängsachse der Wendel 20 |
| $P_H$ | positive Steigung der Haltewindung 30 |

$D_H$     innerer Durchmesser der Haltewindung 30
$R_M$     Montagerichtung, Einsteckrichtung
$R_A$     Auszugsrichtung
EP     Einsteckposition
BP     Blockierposition
WB     Winkelbereich von Übergangswindung 40 und Blockierwindung 50
$d_M$     montierter Außendurchmesser des Gewindeschafts 14 mit Montiersicherung 1

**Patentansprüche**

1. Eine Montiersicherung (1) angepasst an ein Gewinde (RG; FG) eines Gewindeschafts (14) eines Gewindebolzens (10) mit einem Bolzenkopf, sodass die Montiersicherung (1) verliersicher auf dem Gewinde (RG; FG) des Gewindeschafts (14) positionierbar und der Gewindebolzen (10) mit Montiersicherung (1) auszugssicher eingesteckt in einer Bauteilöffnung (72) anordenbar ist, wobei die Montiersicherung (1) die folgenden Merkmale aufweist:

   a. eine zylinderförmige Wendel (20) bestehend aus einer Mehrzahl schraubenförmig gewickelter Windungen (30, 40, 50) eines Drahts, die, vorzugsweise in Steigungsrichtung einer Haltewindung, ein erstes Ende (22) und ein zweites Ende (24) aufweist,
   b. beginnend am ersten Ende (22) der Wendel (20) ist mindestens eine Haltewindung (30) vorgesehen, die sich über einen Winkelbereich von größer 360° um eine Mittellängsachse (L) der Wendel (20) erstreckt und eine positive Steigung $P_H$ sowie einen inneren Durchmesser $D_H$ aufweist,
   c. anschließend an die Haltewindung (30) ist eine Übergangswindung (40) vorgesehen, die sich über einen Winkelbereich von mindestens 65° um die Mittellängsachse (L) der Wendel (20) erstreckt und im Vergleich zur Haltewindung (30) eine kleinere Steigung $P_U$ sowie einen zunehmenden inneren Durchmesser $D_U$ aufweist, und
   d. angrenzend an das zweite Ende (24) der Wendel (20) ist eine Blockierwindung (50) vorgesehen, die sich über einen Winkelbereich von mindestens 65° um die Mittellängsachse (L) der Wendel (20) erstreckt und eine im Vergleich zur Haltewindung (30) negative Steigung $P_B$ aufweist, so dass zumindest ein Endbereich der Blockierwindung (50) in axialer Richtung der Mittellängsachse (L) zwischen einer Einsteckposition (EP) und einer Blockierposition (BP) elastisch versetzbar ist, wobei der Endbereich der Blockierwindung (50) in der Einsteckposition (EP) das zweite Ende (24) der Wendel (20) bildet und in der Blockierposition (BP) radial auswärts von der Übergangswindung (40) und/oder der Haltewindung (30) angeordnet ist.

2. Die Montiersicherung (1) gemäß Patentanspruch 1, deren Draht einen Drahtdurchmesser $D_{Draht}$ aus dem Bereich

$$\sqrt{3} * \frac{7}{24} * P_{RG;FG} \leq D_{Draht} \leq \sqrt{3}\frac{7}{16} * P_{RG;FG}$$

   aufweist, wobei $P_{RG;\,FG}$ eine Steigung eines Gewindes (RG; FG) bezeichnet.

3. Die Montiersicherung (1) gemäß Patentanspruch 2, in der die Haltewindung den inneren Durchmesser $D_H$ aus dem Bereich

$$d_{3,RG;FG} < D_H < d_{2,RG;FG}$$

   aufweist, wobei $d_{3,\,RG;\,FG}$ einen Kerndurchmesser und $d_{2,\,RG;\,FG}$ einen Flankendurchmesser des Gewindes (RG; FG) bezeichnet.

4. Eine Montiersicherung (1) gemäß Patentanspruch 1 oder 2 oder 3, wobei das Gewinde (RG; FG) ein normiertes Regelgewinde RG oder ein normiertes Feingewinde FG ist.

5. Die Montiersicherung (1) gemäß einem der vorhergehenden Patentansprüche, für die geometrische Daten des normierten Regelgewindes RG in den DIN-Normen DIN 13-1 und DIN 13-12 und für die geometrische Daten des normierten Feingewindes FG in den DIN-Normen DIN 13-2 bis DIN 13-12 definiert sind, wobei die geometrischen Daten für das normierte Regelgewinde RG und die geometrischen Daten für das normierte Feingewinde FG die Steigung $P_{RG;\,FG}$, den Kerndurchmesser $d_{3,\,RG;\,FG}$ und den Flankendurchmesser $d_{2,\,RG;\,FG}$ festlegen.

6. Die Montiersicherung (1) gemäß Patentanspruch 4, in der die mindestens eine Haltewindung (30) und die Übergangswindung (40) auf Block gewickelt sind, sodass in axialer Richtung zueinander benachbarte Windungen (30, 40) zumindest teilweise aneinander anliegen.

7. Die Montiersicherung (1) gemäß einem der vorhergehenden Patentansprüche, in der sich die Übergangswindung (40) und die Blockierwindung (50) über einen Winkelbereich von 150° bis 300° um die Mittellängsachse (L) der Wendel (20) erstrecken, vorzugsweise über einen Winkel von 225°.

8. Ein Gewindebolzen (10) mit einem Gewindeschaft (14) und einem Bolzenkopf (12), der ein Gewinde (RG; FG), insbesondere ein normiertes Regelgewinde RG oder ein normiertes Feingewinde FG, aufweist, sowie eine Montiersicherung (1) gemäß einem der vorhergehenden Patentansprüche, die verliersicher auf dem Gewindeschaft (14) mit dem zweiten Ende (24) der zylinderförmigen Wendel (20) benachbart zum Bolzenkopf (12) angeordnet ist.

9. Der Gewindebolzen (10) gemäß Patentanspruch 8, an dem das Gewinde (RG, FG) als ein normiertes Regelgewinde RG oder ein normiertes Feingewinde FG auf dem Gewindeschaft (14) durch den normierte Nenndurchmesser $d_{RG; FG}$ und die normierte Steigung $P_{RG; FG}$ definiert ist und der Gewindeschaft (14) in Kombination mit der Montiersicherung (1) einen montierten Außendurchmesser $d_M$ aus dem Bereich

$$d_M = d_{RG;FG} - \frac{7}{8}\sqrt{3} * P_{RG;FG} + 3 * D_{Draht}$$

aufweist, in dem sich der Drahtdurchmesser $D_{Draht}$ der Montiersicherung (1) über den Bereich

$$\sqrt{3} * \frac{7}{24} * P_{RG;FG} \leq D_{Draht} \leq \sqrt{3}\frac{7}{16} * P_{RG;FG}$$

erstreckt.

10. Der Gewindebolzen (10) gemäß Patentanspruch 8 oder 9, in dem ein Draht der Montiersicherung (1) so tief in radialer Richtung in einem Gewindetal (17) des Gewindebolzens (10) aufgenommen ist, dass ein Mittelpunkt des Drahts der Montiersicherung (1) maximal auf einer Höhe von einander direkt gegenüberliegenden Gewindespitzen des Gewindebolzens (10) oder radial tiefer in dem Gewindetal (17) angeordnet ist.

11. Ein Bauteil (70) mit einem im Querschnitt runden Durchgangsloch (72), in dem der Gewindebolzen (10) mit Montiersicherung (1) gemäß Patentanspruch 8 oder 9 oder 10 auszugsicher angeordnet ist.

12. Das Bauteil (70) gemäß Patentanspruch 11, in dem das Durchgangsloch (72) einen Lochdurchmesser $D_L$ aus dem Bereich

$$d_M < D_L \leq d_{RG;FG} - \frac{7}{8}\sqrt{3} * P_{RG;FG} + 4 * D_{Draht}$$

aufweist mit $d_M$ als montierter Außendurchmesser aus dem Bereich von

$$d_M = d_{RG;FG} - \frac{7}{8}\sqrt{3} * P_{RG;FG} + 3 * D_{Draht}$$

wobei der Drahtdurchmesser $D_{Draht}$ der Montiersicherung (1) in dem Bereich

$$\sqrt{3} * \frac{7}{24} * P_{RG;FG} \leq D_{Draht} \leq \sqrt{3}\frac{7}{16} * P_{RG;FG}$$

liegt.

**13.** Ein Herstellungsverfahren einer Montiersicherung (1), insbesondere einer Montiersicherung (1) gemäß einem der Patentansprüche 1 bis 7, welches die folgenden Schritte aufweist:
Wickeln (S1) eines Drahts zu einer zylinderförmigen Wendel (20) bestehend aus einer Mehrzahl schraubenförmig gewickelter Windungen (30, 40, 50) des Drahts, wobei

    a. eine zylinderförmige Wendel (20) bestehend aus einer Mehrzahl schraubenförmig gewickelter Windungen (30, 40, 50) eines Drahts gebildet wird, die, vorzugsweise in Steigungsrichtung einer Haltewindung (30), ein erstes Ende (22) und ein zweites Ende (24) aufweist (S1a),
    b. beginnend am ersten Ende (22) der Wendel (20) ist mindestens eine Haltewindung (30) gewickelt, die sich über einen Winkelbereich von größer 360° um eine Mittellängsachse (L) der Wendel (20) erstreckt und eine positive Steigung $P_H$ sowie einen inneren Durchmesser $D_H$ aufweist (S1b),
    c. anschließend an die Haltewindung (30) ist eine Übergangswindung (40) gewickelt (S1c), die sich über einen Winkelbereich von mindestens 65° um die Mittellängsachse (L) der Wendel (20) erstreckt und im Vergleich zur Haltewindung (30) eine kleinere Steigung $P_U$ sowie einen zunehmenden inneren Durchmesser $D_U$ aufweist, und
    d. angrenzend an das zweite Ende (24) der Wendel (20) ist eine Blockierwindung (50) gewickelt (S1d), die sich über einen Winkelbereich von mindestens 65° um die Mittellängsachse (L) der Wendel (20) erstreckt und eine im Vergleich zur Haltewindung (30) negative Steigung $P_B$ aufweist, so dass zumindest ein Endbereich der Blockierwindung (50) in axialer Richtung der Mittellängsachse (L) zwischen einer Einsteckposition (EP) und einer Blockierposition (BP) elastisch versetzbar ist, wobei der Endbereich der Blockierwindung (50) in der Einsteckposition (EP) das zweite Ende (24) der Wendel (20) bildet und in der Blockierposition (BP) radial auswärts von der Übergangswindung (40) und/oder der Haltewindung (30) angeordnet ist.

**14.** Ein Montageverfahren eines Gewindebolzens mit einer Montiersicherung gemäß Patentanspruch 8 oder 9 oder 10 in einem Durchgangsloch eines Bauteils gemäß Patentanspruch 11, mit den Schritten:

    Einstecken (Schritt M1) des Gewindebolzens mit Montiersicherung in das Durchgangsloch des Bauteils, wobei ein Endbereich der Blockierwindung das zweite Ende der Wendel benachbart zum Bolzenkopf bildet, und elastisches Zurückfedern (Schritt M2) zumindest eines Endbereichs der Blockierwindung in Richtung des ersten Endes der Wendel, sodass der Endbereich der Blockierwindung radial auswärts von der Übergangswindung und/oder der Haltebindung angeordnet ist.

**Claims**

**1.** An assembly locking device (1) adapted to a thread (RG; FG) of a thread shaft (14) of a thread bolt (10) with a bolt head, so that the assembly locking device (1) is positionable on the thread (RG; FG) of the thread shaft (14) in a loss-proof manner and the thread bolt (10) with assembly locking device (1) is arrangeable in a pull-out-proof manner inserted in a component opening (72), wherein the assembly locking device (1) comprises the following features:

    a. a cylindrical helix (20) comprised of a plurality of helically wound turns (30, 40, 50) of a wire, which, preferably in the pitch direction of a holding turn, comprises a first end (22) and a second end (24),
    b. starting at the first end (22) of the helix (20), at least one holding turn (30) is provided, which extends over an angular range of greater than 360° about a central longitudinal axis (L) of the helix (20) and comprises a positive pitch $P_H$ as well as an inner diameter $D_H$,
    c. following the holding turn (30), a transition turn (40) is provided which extends over an angular range of at least 65° about the central longitudinal axis (L) of the helix (20) and comprises a smaller pitch $P_U$ as well as an increasing inner diameter $D_U$ compared to the holding turn (30), and
    d. adjacent to the second end (24) of the helix (20), a blocking turn (50) is provided which extends over an angular range of at least 65° about the central longitudinal axis (L) of the helix (20) and comprises a negative pitch $P_B$ compared to the holding turn (30), so that at least an end portion of the blocking turn (50) is elastically displaceable in the axial direction of the central longitudinal axis (L) between an insertion position (EP) and a blocking position (BP), wherein the end portion of the blocking turn (50) forms the second end (24) of the helix (20) in the insertion position (EP) and is arranged radially outwardly of the transition turn (40) and/or the holding turn (30) in the blocking position (BP).

**2.** The assembly locking device (1) according to claim 1, the wire of which comprises a wire diameter $D_{Draht}$ in the range of

$$\sqrt{3} * \frac{7}{24} * P_{RG;FG} \leq D_{Draht} \leq \sqrt{3}\frac{7}{16} * P_{RG;FG}$$

wherein $P_{RG;FG}$ denotes a pitch of a thread (RG; FG).

3. The assembly locking device (1) according to claim 2, in which the holding turn comprises the inner diameter $D_H$ in the range of

$$d_{3,RG;FG} < D_H < d_{2,RG;FG}$$

wherein $d_{3,\,RG;\,FG}$ denotes a core diameter and $d_{2,\,RG;\,FG}$ denotes a flank diameter of the thread (RG; FG).

4. An assembly locking device (1) according to claim 1 or 2 or 3, wherein the thread (RG; FG) is a normalized standard thread RG or a normalized fine thread FG.

5. The assembly locking device (1) according to one of the preceding claims, for which geometrical data of the normalized standard thread RG are defined in the DIN standards DIN 13-1 and DIN 13-12 and for which geometrical data of the normalized fine thread FG are defined in the DIN standards DIN 13-2 to DIN 13-12, wherein the geometrical data for the normalized standard thread RG and the geometrical data for the normalized fine thread FG define the pitch $P_{RG;\,FG}$, the core diameter $d_{3,\,RG;\,FG}$ and the flank diameter $d_{2,\,RG;\,FG}$.

6. The assembly locking device (1) according to claim 4, in which the at least one holding turn (30) and the transition turn (40) are wound on block so that turns (30, 40) adjacent to each other in the axial direction are abutting each other at least partially.

7. The assembly locking device (1) according to one of the preceding claims, in which the transition turn (40) and the blocking turn (50) extend over an angular range of 150° to 300° about the central longitudinal axis (L) of the helix (20), preferably over an angle of 225°.

8. A thread bolt (10) with a thread shaft (14) and a bolt head (12) which comprises a thread (RG; FG), in particular a normalized standard thread RG or a normalized fine thread FG, as well as an assembly locking device (1) according to one of the preceding claims, which is arranged in a loss-proof manner on the thread shaft (14) with the second end (24) of the cylindrical helix (20) adjacent to the bolt head (12).

9. The thread bolt (10) according to claim 8, on which the thread (RG, FG) is defined as a normalized standard thread RG or a normalized fine thread FG on the thread shaft (14) by the normalized nominal diameter $d_{RG;\,FG}$ and the normalized pitch $P_{RG;\,FG}$ and the thread shaft (14) in combination with the assembly locking device (1) comprises an assembled outer diameter $d_M$ in the range of

$$d_M = d_{RG;FG} - \frac{7}{8}\sqrt{3} * P_{RG;FG} + 3 * D_{Draht}$$

in which the wire diameter $D_{Draht}$ of the assembly locking device (1) is within the range of

$$\sqrt{3} * \frac{7}{24} * P_{RG;FG} \leq D_{Draht} \leq \sqrt{3}\frac{7}{16} * P_{RG;FG}$$

10. The thread bolt (10) according to claim 8 or 9, in which a wire of the assembly locking device (1) is received in a thread valley (17) of the thread bolt (10) so deep in radial direction that a center point of the wire of the assembly locking device (1) is arranged at most at a level of thread tips of the thread bolt (10) which are directly opposite to each other or radially deeper in the thread valley (17).

11. A component (70) with a passage hole (72) which is round in cross-section, in which the thread bolt (10) with assembly locking device (1) according to claim 8 or 9 or 10 is arranged in a pull-out-proof manner.

12. The component (70) according to claim 11, in which the passage hole (72) comprises a hole diameter $D_L$ in the range of

$$d_M < D_L \leq d_{RG;FG} - \frac{7}{8}\sqrt{3} * P_{RG;FG} + 4 * D_{Draht}$$

with $d_M$ as assembled outer diameter in the range of

$$d_M = d_{RG;FG} - \frac{7}{8}\sqrt{3} * P_{RG;FG} + 3 * D_{Draht}$$

wherein the wire diameter $D_{Draht}$ of the assembly locking device (1) is in the range of

$$\sqrt{3} * \frac{7}{24} * P_{RG;FG} \leq D_{Draht} \leq \sqrt{3}\frac{7}{16} * P_{RG;FG}$$

13. A manufacturing method of an assembly locking device (1), in particular of an assembly locking device (1) according to one of the claims 1 to 7, comprising the following steps:
winding (S1) a wire to form a cylindrical helix (20) comprised of a plurality of helically wound turns (30, 40, 50) of the wire, wherein

a. a cylindrical helix (20) comprised of a plurality of helically wound turns (30, 40, 50) of wire is formed which comprises, preferably in the pitch direction of a holding turn (30), a first end (22) and a second end (24) (S1a),
b. starting at the first end (22) of the helix (20), at least one holding turn (30) is wound, which extends over an angular range of greater than 360° about a central longitudinal axis (L) of the helix (20) and comprises a positive pitch $P_H$ as well as an inner diameter $D_H$ (S1b),
c. following the holding turn (30), a transition turn (40) is wound (S1c), which extends over an angular range of at least 65° about the central longitudinal axis (L) of the helix (20) and comprises a smaller pitch $P_U$ as well as an increasing inner diameter $D_U$ compared to the holding turn (30), and
d. adjacent to the second end (24) of the helix (20), a blocking turn (50) is wound (S1d), which extends over an angular range of at least 65° about the central longitudinal axis (L) of the helix (20) and comprises a negative pitch $P_B$ compared to the holding turn (30), so that at least an end portion of the blocking turn (50) is elastically displaceable in axial direction of the central longitudinal axis (L) between an insertion position (EP) and a blocking position (BP), wherein the end portion of the blocking turn (50) forms the second end (24) of the helix (20) in the insertion position (EP) and is arranged radially outwardly of the transition turn (40) and/or the holding turn (30) in the blocking position (BP).

14. An assembly method of a thread bolt with an assembly locking device according to claim 8 or 9 or 10 in a passage hole of a component according to claim 11, comprising the following steps:

inserting (step M1) the thread bolt with assembly locking device into the passage hole of the component, with an end portion of the blocking turn forming the second end of the helix adjacent to the bolt head, and
elastically springing back (step M2) of at least an end portion of the blocking turn in the direction of the first end of the helix so that the end portion of the blocking turn is arranged radially outwardly of the transition turn and/or the holding turn.

**Revendications**

1. Fixation de montage (1) adaptée à un filetage (RG ; FG) d'une tige filetée (14) d'un boulon fileté (10) pourvu d'une tête de boulon, de sorte que la fixation de montage (1) peut être positionnée de manière imperdable sur le filetage (RG ; FG) de la tige filetée (14) et que le boulon fileté (10) peut être disposé de manière à être inséré sans possibilité de retrait dans une ouverture de composant (72) avec la fixation de montage (1), la fixation de montage (1) présentant les caractéristiques suivantes :

a. une spirale cylindrique (20) constituée d'une pluralité de spires (30, 40, 50) d'un fil enroulées de façon hélicoïdale, laquelle présente une première extrémité (22) et une deuxième extrémité (24) de préférence dans la direction de pas d'une spire de maintien,

b. à partir de la première extrémité (22) de la spirale (20), il est prévu au moins une spire de maintien (30), laquelle s'étend sur une plage angulaire supérieure à 360° autour d'un axe longitudinal médian (L) de la spirale (20) et présente un pas positif $P_H$ ainsi qu'un diamètre intérieur $D_H$,

c. à la suite de la spire de maintien (30), il est prévu une spire de transition (40), laquelle s'étend sur une plage angulaire d'au moins 65° autour de l'axe longitudinal médian (L) de la spirale (20) et présente un pas plus petit $P_U$ et un diamètre intérieur plus grand $D_U$ en comparaison avec la spire de maintien (30), et

d. de manière adjacente à la deuxième extrémité (24) de la spirale (20), il est prévu une spire de blocage (50), laquelle s'étend sur une plage angulaire d'au moins 65° autour de l'axe longitudinal médian (L) de la spirale (20) et présente un pas négatif $P_B$ en comparaison avec la spire de maintien (30), de sorte qu'au moins une région terminale de la spire de blocage (50) peut être déplacée élastiquement dans la direction axiale de l'axe longitudinal médian (L) entre une position d'insertion (EP) et une position de blocage (BP), la région terminale de la spire de blocage (50) formant la deuxième extrémité (24) de la spirale (20) dans la position d'insertion (EP) et étant disposée radialement à l'extérieur par rapport à la spire de transition (40) et/ou à la spire de maintien (30) dans la position de blocage (BP).

2. Fixation de montage (1) selon la revendication 1, dont le fil présente un diamètre de fil $D_{Draht}$ dans la plage suivante :

$$\sqrt{3} * \frac{7}{24} * P_{RG;FG} \leq D_{Draht} \leq \sqrt{3}\frac{7}{16} * P_{RG;FG}$$

où $P_{RG;FG}$ désigne un pas d'un filetage (RG ; FG).

3. Fixation de montage (1) selon la revendication 2, dans laquelle la spire de maintien présente le diamètre intérieur $D_H$ dans la plage suivante :

$$d_{3,RG;FG} < D_H < d_{2,RG;FG}$$

où $d_{3, RG;FG}$ désigne un diamètre de cœur et $d_{2, RG;FG}$ un diamètre sur flancs du filetage (RG ; FG).

4. Fixation de montage (1) selon la revendication 1 ou 2 ou 3, dans laquelle le filetage (RG ; FG) est un filetage standard normalisé RG ou un filetage fin normalisé FG.

5. Fixation de montage (1) selon l'une des revendications précédentes, pour laquelle des données géométriques du filetage standard normalisé RG sont définies dans les normes DIN 13-1 et DIN 13-12 et pour laquelle des données géométriques du filetage fin normalisé FG sont définies dans les normes DIN 13-2 à DIN 13-12, dans laquelle les données géométriques pour le filetage standard normalisé RG et les données géométriques pour le filetage fin normalisé FG spécifient le pas $P_{RG;FG}$, le diamètre de cœur $d_{3, RG;FG}$ et le diamètre sur flancs $d_{2, RG;FG}$.

6. Fixation de montage (1) selon la revendication 4, dans laquelle l'au moins une spire de maintien (30) et la spire de transition (40) sont enroulées sur bloc, de sorte que des spires (30, 40) adjacentes l'un à l'autre dans la direction axiale s'appliquent au moins partiellement l'une contre l'autre.

7. Fixation de montage (1) selon l'une des revendications précédentes, dans laquelle la spire de transition (40) et la spire de blocage (50) s'étendent sur une plage angulaire de 150° à 300° autour de l'axe longitudinal médian (L) de la spirale (20), de préférence sur un angle de 225°.

8. Boulon fileté (10) pourvu d'une tige filetée (14) et d'une tête de boulon (12), lequel présente un filetage (RG ; FG), en particulier un filetage standard normalisé RG ou un filetage fin normalisé FG, ainsi qu'une fixation de montage (1) selon l'une des revendications précédentes, laquelle est disposée de manière imperdable sur la tige filetée (14) avec la deuxième extrémité (24) de la spirale cylindrique (20) adjacente à la tête de boulon (12).

9. Boulon fileté (10) selon la revendication 8, sur lequel le filetage (RG ; FG) est défini en tant que filetage standard normalisé RG ou que filetage fin normalisé FG sur la tige filetée (14) par le diamètre nominal normalisé $d_{RG;FG}$ et le pas normalisé $P_{RG;FG}$, et la tige filetée (14) en combinaison avec la fixation de montage (1) présente un diamètre extérieur monté $d_M$ dans la plage suivante :

$$d_M = d_{RG;FG} - \frac{7}{8}\sqrt{3} * P_{RG;FG} + 3 * D_{Draht}$$

où le diamètre de fil $D_{Draht}$ de la fixation de montage (1) s'étend sur la plage suivante :

$$\sqrt{3} * \frac{7}{24} * P_{RG;FG} \leq D_{Draht} \leq \sqrt{3}\frac{7}{16} * P_{RG;FG}$$

**10.** Boulon fileté (10) selon la revendication 8 ou 9, dans lequel un fil de la fixation de montage (1) est reçu si profondément dans un fond de filetage (17) du boulon fileté (10) dans la direction radiale, qu'un point central du fil de la fixation de montage (1) est disposé au maximum à une hauteur de pointes de filetage du boulon fileté (10) directement opposées l'une à l'autre ou radialement plus profondément dans le fond de filetage (17).

**11.** Composant (70) présentant un trou de passage (72) à section transversale ronde, dans lequel le boulon fileté (10) pourvu de la fixation de montage (1) selon la revendication 8 ou 9 ou 10 est disposé sans possibilité de retrait.

**12.** Composant (70) selon la revendication 11, dans lequel le trou de passage (72) présente un diamètre de trou $D_L$ dans la plage suivante :

$$d_M < D_L \leq d_{RG;FG} - \frac{7}{8}\sqrt{3} * P_{RG;FG} + 4 * D_{Draht}$$

avec dM comme diamètre extérieur monté dans la plage suivante :

$$d_M = d_{RG;FG} - \frac{7}{8}\sqrt{3} * P_{RG;FG} + 3 * D_{Draht}$$

où le diamètre de fil $D_{Draht}$ de la fixation de montage (1) est compris dans la plage suivante :

$$\sqrt{3} * \frac{7}{24} * P_{RG;FG} \leq D_{Draht} \leq \sqrt{3}\frac{7}{16} * P_{RG;FG}$$

**13.** Procédé de fabrication d'une fixation de montage (1), en particulier d'une fixation de montage (1) selon l'une des revendications 1 à 7, présentant les étapes suivantes :

- enroulement (S1) d'un fil en une spirale cylindrique (20) constituée d'une pluralité de spires (30, 40, 50) du fil enroulées de façon hélicoïdale, dans lequel

a. une spirale cylindrique (20) constituée d'une pluralité de spires (30, 40, 50) du fil enroulées de façon hélicoïdale est formée, laquelle présente une première extrémité (22) et une deuxième extrémité (24) de préférence dans la direction de pas d'une spire de maintien (30), (S1a),
b. au moins une spire de maintien (30) est enroulée à partir de la première extrémité (22) de la spirale (20), laquelle s'étend sur une plage angulaire supérieure à 360° autour d'un axe longitudinal médian (L) de la spirale (20) et présente un pas positif $P_H$ ainsi qu'un diamètre intérieur $D_H$, (Slb),
c. une spire de transition (40) est enroulée (S1c) à la suite de la spire de maintien (30), laquelle s'étend sur une plage angulaire d'au moins 65° autour de l'axe longitudinal médian (L) de la spirale (20) et présente un pas plus petit $P_U$ et un diamètre intérieur plus grand $D_U$ en comparaison avec la spire de maintien (30), et
d. une spire de blocage (50) est enroulée (S1d) de manière adjacente à la deuxième extrémité (24) de la spirale (20), laquelle s'étend sur une plage angulaire d'au moins 65° autour de l'axe longitudinal médian (L) de la spirale (20) et présente un pas négatif $P_B$ en comparaison avec la spire de maintien (30), de sorte qu'au moins une région terminale de la spire de blocage (50) peut être déplacée élastiquement dans la direction axiale de l'axe longitudinal médian (L) entre une position d'insertion (EP) et une position de blocage (BP), la région terminale de la spire de blocage (50) formant la deuxième extrémité (24) de la spirale (20) dans la position d'insertion (EP) et étant disposée radialement à l'extérieur par rapport à la spire de transition (40) et/ou à la spire de maintien (30) dans la position de blocage (BP).

14. Procédé de montage d'un boulon fileté pourvu d'une fixation de montage selon la revendication 8 ou 9 ou 10 dans un trou de passage d'un composant selon la revendication 11, comprenant les étapes suivantes :

- insertion (étape M1) du boulon fileté avec la fixation de montage dans le trou de passage du composant, une région terminale de la spire de blocage formant la deuxième extrémité de la spirale à proximité de la tête de boulon, et
- rappel élastique (étape M2) au moins d'une région terminale de la spire de blocage dans la direction de la première extrémité de la spirale, de sorte que la région terminale de la spire de blocage est disposée radialement à l'extérieur par rapport à la spire de transition et/ou à la spire de maintien.

**FIG. 1**

**FIG. 2**

**FIG. 3**

## FIG. 4

## FIG. 5

## FIG. 6

**FIG. 7**

**a)**

**b)**

**c)**

**d)**

## FIG. 8

**FIG. 9**

**FIG. 10**

Fig. 11

```
┌─────────┐
│         │
│   S1a   │
│         │
└────┬────┘
     │
     ▼
┌─────────┐
│         │
│   S1b   │
│         │
└────┬────┘
     │
     ▼
┌─────────┐
│         │
│   S1c   │
│         │
└────┬────┘
     │
     ▼
┌─────────┐
│         │
│   S1d   │
│         │
└─────────┘
```

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2119921 A
- WO 2018155466 A